# EUROPEAN PATENT APPLICATION

(11) **EP 4 650 700 A1**
(43) Date of publication of application: **19.11.2025**
(21) Application number: 24203720.8
(22) Date of filing: 30.09.2024
(51) Int. Cl.: F28D 1/03, F28F 13/06, H01M 10/613, H01M 10/643, H01M 10/6556, H01M 10/6568, H01M 50/213, H01M 50/244, H01M 50/262, H01M 50/289, H01M 50/691, F28F 3/12, F28D 21/00

(54) **SEPARATOR, BATTERY BOX, AND BATTERY PACK**

(30) Priority: 17.05.2024 WO PCT/CN2024/094021
(71) Applicant: Eve Energy Co., Ltd., Huizhou, Guangdong 516006 (CN)
(72) Inventor: LI, Xingyao, Guangdong, 516006 (CN); HUANG, Minzhi, Guangdong, 516006 (CN); YAN, Shiwei, Guangdong, 516006 (CN); HUANG, Guanping, Guangdong, 516006 (CN)
(74) Representative: HGF

(57) **Abstract**

Provided are a separator (2), a battery box (100), and a battery pack. The separator is applied to the battery box (100) and includes a first body and a first flow guiding assembly (2021,2022). The first body is provided with a return hole (2011) and multiple mounting holes (2012) passing through the first body in a first direction. The multiple mounting holes (2012) are located between the liquid outlet region and the return hole (2011). The first flow guiding assembly and the liquid outlet region are located on the same side surface of the first body. The first flow guiding assembly includes multiple first flow guiding grooves (2021). The first flow guiding assembly is configured to guide a coolant in the region in which the battery module is located to the liquid outlet region.

## Description

### TECHNICAL FIELD

The present application relates to the technical field of batteries, for example, a separator, a battery box, and a battery pack.

### BACKGROUND

A battery pack generally includes a battery box and a battery module disposed in the battery box. The battery module includes several cells arranged in a set manner. Heat dissipation of the battery pack is greatly important. The heat dissipation effect directly affects the service life of the battery pack. At present, the battery pack adopts air-cooling heat dissipation, water-cooling plate heat dissipation and immersion coolant heat dissipation. For the immersion coolant heat dissipation, a coolant is directly sent into the battery box to contact a cell housing for heat exchange. At present, in this heat dissipation manner, one end of the battery box in the length direction is provided with a liquid inlet, and the other end is provided with a liquid outlet. The coolant is introduced into the liquid inlet. After the cells are immersed in the coolant, the coolant flows out from the liquid outlet. The coolant is cooled outside the battery box and then is delivered to the liquid inlet after cooling. As such, the cells of the battery module are cooled.

The related art has the following situation. After the coolant enters the battery box, a position adjacent to the liquid inlet can contact more coolant with a low temperature while a position away from the liquid inlet contacts less or even cannot contact coolant with a low temperature. As a result, part of the cells in the battery box cannot be immersed in the coolant at a low temperature. This part of cells is prone to have a poor heat exchange effect. The cells with a poor heat exchange effect may age prematurely and have a reduction in capacity, thereby reducing the service life of the battery pack.

### SUMMARY

Embodiments of the present application provide a separator. The separator can improve the guide effect of a coolant in a battery box, improve the heat exchange effect of each cell and prolong the service life of the cells.

Embodiments of the present application provide a tray. The tray can disperse the coolant entering the battery box to enable each cell to be more uniformly immersed in the coolant at a low temperature, decreasing the probability of the coolant returning to heat-exchanged cells and prolonging the service life of the multiple cells.

Embodiments of the present application provide a battery box and a battery pack. The battery box and the battery pack have simple structures, heat exchange between cells is uniform, and the service life of the battery pack is long.

Embodiments of the present application provide a cooling method for a battery pack. The method can effectively improve the uniformity of heat dissipation effect of each cell in the battery pack to prolong the service life of the battery pack.

In a first aspect, embodiments of the present application provide a separator. The separator is applied to a battery box and includes a first body and a first flow guiding assembly.

The first body is provided with a return hole and a plurality of mounting holes passing through the first body in a first direction, the plurality of mounting holes are configured to mount cells of a battery module, a liquid outlet region is formed on one side surface of the first body in the first direction and configured to communicate with a liquid outlet of the battery box, the liquid outlet region and the return hole are adjacent to two ends of the first body in a second direction respectively, the plurality of mounting holes are located between the liquid outlet region and the return hole, and the first direction is disposed at an included angle with the second direction.

The first flow guiding assembly and the liquid outlet region are located on the same side surface of the first body, and the first flow guiding assembly includes a plurality of first flow guiding grooves, first ends of all the plurality of first flow guiding grooves communicate with the liquid outlet region, second ends of all the plurality of first flow guiding grooves communicate with a region in which the battery module is located, and the first flow guiding assembly is configured to guide a coolant in the region in which the battery module is located to the liquid outlet region.

In a second aspect, embodiments of the present application provide a tray. The tray is applied to a battery box and includes a second body, a third flow guiding assembly and a drainage plate.

A liquid inlet region is disposed on the second body, configured to communicate with a liquid inlet of the battery box and disposed on one side surface of the second body in a first direction.

The third flow guiding assembly and the liquid inlet region are located on the same side surface of the second body, and the third flow guiding assembly includes a plurality of third flow guiding grooves, first ends of all the plurality of third flow guiding grooves communicate with the liquid inlet region, second ends of all the plurality of third flow guiding grooves communicate with a region in which a battery module is located, and the third flow guiding assembly is configured to disperse and guide a coolant in the liquid inlet region to the battery module.

The drainage plate and the third flow guiding assembly are located on the same side surface of the second body in the first direction and adjacent to two ends of the second body in a second direction respectively, and one side surface of the drainage plate facing the third flow guiding assembly is provided with a drainage surface.

In a third aspect, embodiments of the present application provide a battery box. The battery box includes a box body and a separator.

A liquid inlet and a liquid outlet are spaced apart on the box body, and an accommodation cavity configured to accommodate a battery module is disposed in the box body.

The separator is disposed in the accommodation cavity and is configured to divide the accommodation cavity into a first cavity and a second cavity that are distributed in a first direction, a plurality of mounting holes configured to mount cells of the battery module are disposed on the separator, two ends of each cell extend into the first cavity and the second cavity respectively, a return hole is disposed on the separator, the separator has a liquid outlet region communicating with the liquid outlet, the liquid outlet region is located within the first cavity, the liquid outlet region and the return hole are adjacent to two ends of the separator in a second direction respectively, the liquid outlet communicates with the liquid outlet region, the second cavity has a liquid inlet region, the liquid inlet region and the liquid outlet region are adjacent to the same end of the box body in the second direction, and the liquid inlet communicates with the liquid inlet region. The first direction is disposed at an included angle with the second direction.

In a fourth aspect, embodiments of the present application provide a battery pack. The battery pack includes a battery module and a battery box. The battery module is sealed and mounted within the battery box, and the battery box is the battery box described in the third aspect.

In a fifth aspect, embodiments of the present application provide a cooling method for a battery pack. The cooling method is applied to the battery pack described in the fourth aspect and includes the steps below.

A coolant is supplied to enable the coolant to enter a second cavity from a liquid inlet of a battery box to immerse a portion of cells located in the second cavity in the coolant along a second direction from one end of the second cavity provided with a liquid inlet region to one end away from the liquid inlet region.

The coolant within the second cavity enters a first cavity through a return hole on a separator to immerse a portion of the cells located in the first cavity in the coolant along the second direction from one end of the first cavity provided with the return hole to one end at which a liquid outlet region is located.

The coolant is collected in the liquid outlet region and discharged through a liquid outlet of the battery box.

The present application has the following beneficial effects. The return hole passing through the first body is disposed on the first body so that the coolant on one side surface of the first body away from the liquid outlet region can be introduced into one side surface of the first body provided with the liquid outlet region through the return hole. The return hole and the liquid outlet region are disposed at two ends of the first body in the second direction respectively so that the cells protruding from the first body can be immersed in the coolant sequentially from the position at which the return hole is located, and after heat exchange, the coolant can be collected into the liquid outlet region and discharged through the liquid outlet, improving the heat exchange effect of the cells. In addition, the first flow guiding assembly is disposed between the liquid outlet region and the battery module so that all the coolant at the cells after the heat exchange can be collected into the liquid outlet region as quickly as possible, and the discharge of the coolant with a high temperature after the heat exchange can be accelerated, improving the cooling effect.

The present application has the following beneficial effects. The liquid inlet region and the third flow guiding assembly are disposed on the tray. The liquid inlet region is configured to receive the coolant from the liquid inlet of the battery box. After dispersing the coolant in the liquid inlet region, the third flow guiding assembly guides the coolant to the battery module so that the battery module can be immersed in the coolant more uniformly for heat exchange and dissipation, improving the heat dissipation effect of the battery module. The drainage plate is disposed so that the drainage plate can drain the coolant that has undergone heat exchange with the battery module to other regions for heat exchange or to the exterior of the battery box, ensuring the smooth operation of heat exchange in other regions and decreasing the probability of the coolant returning to the heat-exchanged battery module.

The present application has the following beneficial effects. The separator is disposed to divide the accommodation cavity within the box body into the first cavity and the second cavity that are independent of each other. After the cells are mounted to the separator, the two cavities are sealed relatively. The coolant first enters the liquid inlet region of the second cavity through the liquid inlet, and the portion of the cells located in the second cavity is then immersed in the coolant from one end facing the liquid inlet region to one end away from the liquid inlet region along the second direction sequentially to perform heat exchange and dissipation on this portion of the cells, then the coolant enters the first cavity through the plurality of return holes on the separator, and the portion of the cells located in the first cavity is immersed in the coolant from one side on which the return hole is located to the liquid outlet region sequentially to perform heat exchange and dissipation on the rest of the plurality of cells. The coolant after the heat exchange is collected in the liquid outlet region, and discharged through the liquid outlet. During the whole process, the coolant exchanges heat with the cells of the battery module in steps, and the special immersion path of the coolant increases the probability of each cell contacting the coolant; thus, improving the uniformity and effect of heat exchanges of all the cells and prolonging the service life of all the cells.

### BRIEF DESCRIPTION OF DRAWINGS

FIG. 1 is a front view of a separator according to an embodiment of the present application.
FIG. 2 is a perspective view of a separator taken from a viewing angle according to an embodiment of the present application.
FIG. 3 is a perspective view of a separator taken from another viewing angle according to an embodiment of the present application.
FIG. 4 is an enlarged view of part A of FIG. 1.
FIG. 5 is an enlarged view of part B of FIG. 1.
FIG. 6 is a front view of a tray according to an embodiment of the present application.
FIG. 7 is a perspective view of a tray taken from a viewing angle according to an embodiment of the present application.
FIG. 8 is a perspective view of a tray taken from another viewing angle according to an embodiment of the present application.
FIG. 9 is an enlarged view of part C of FIG. 6.
FIG. 10 is a perspective view of an integrated structure of a tray and a box body taken from a viewing angle according to an embodiment of the present application.
FIG. 11 is a perspective view of an integrated structure of a tray and a box body taken from another viewing angle according to an embodiment of the present application.
FIG. 12 is a top view of a battery box according to an embodiment of the present application.
FIG. 13 is a perspective view of a battery box taken from a viewing angle according to an embodiment of the present application.
FIG. 14 is a perspective view of a battery box taken from another viewing angle according to an embodiment of the present application.
FIG. 15 is a top view of a battery box (a second sealing plate is not shown) according to an embodiment of the present application.
FIG. 16 is a perspective view of a battery box (a second sealing plate is not shown) according to an embodiment of the present application.
FIG. 17 is a top view of a battery pack (a second sealing plate is not shown) according to an embodiment of the present application.
FIG. 18 is a perspective view of a battery pack (a second sealing plate is not shown) according to an embodiment of the present application.
FIG. 19 is an exploded view of a battery pack according to an embodiment of the present application.
FIG. 20 is a perspective view of a box body taken from a viewing angle according to an embodiment of the present application.
FIG. 21 is a perspective view of a box body taken from another viewing angle according to an embodiment of the present application.
FIG. 22 is a cross-section view of a battery pack (with the direction of the arrow being a flow direction of a coolant) according to an embodiment of the present application.
FIG. 23 is a partial cross-section view of a separator according to an embodiment of the present application.
FIG. 24 is a section view of a diverter according to an embodiment of the present application.

### Reference list:

- 100: battery box
- 1: box body
- 101: liquid inlet
- 102: liquid outlet
- 103: first cavity
- 104: second cavity
- 105: first side plate
- 106: second side plate
- 107: third recess
- 108: protruding structure
- 109: recess structure
- 1010: mounting portion
- 1011: sealing groove
- 1012: step
- 1013: second pressure relief hole
- 1014: opening
- 2: separator
- 201: first body
- 2011: return hole
- 20111: arcuate hole wall
- 20112: flat hole wall
- 2012: mounting hole
- 2013: liquid outlet region
- 2014: first protrusion
- 2015: immersion hole
- 2016: first recess
- 2017: via
- 2018: collection groove
- 202: first flow guiding assembly
- 2021: first flow guiding groove
- 2022: first flow guiding plate
- 20221: first outer flow guiding plate
- 20222: first inner flow guiding plate
- 203: second flow guiding assembly
- 2031: second flow guiding groove
- 2032: second flow guiding plate
- 204: liquid inlet pipe
- 205: blocking plate
- 2051: blocking plate flow guiding surface
- 3: tray
- 301: second body
- 3011: liquid inlet region
- 3012: mounting groove
- 3013: first pressure relief hole
- 3014: second recess
- 3015: pressure relief groove
- 3016: second protrusion
- 302: third flow guiding assembly
- 3021: third flow guiding groove
- 3022: third flow guiding plate
- 30221: third outer flow guiding plate
- 30222: third inner flow guiding plate
- 303: drainage plate
- 3031: drainage surface
- 304: diverter
- 3041: diversion top surface
- 3042: diversion outer peripheral surface
- 30421: connection surface
- 30422: diversion guide surface
- 3043: diversion bottom surface
- 305: connection protruding portion
- 3051: slot
- 306: pillar
- 4: first sealing plate
- 5: second sealing plate
- 6: liquid inlet joint
- 7: liquid outlet joint
- 200: battery module
- 210: cell group
- 211: cell
- 220: flow guiding clearance

### DETAILED DESCRIPTION

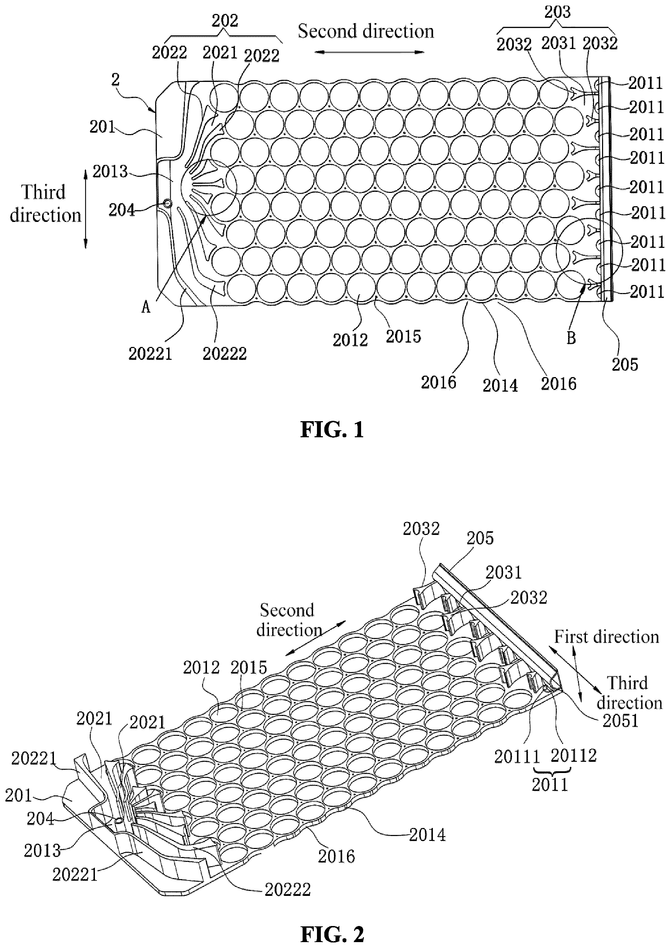

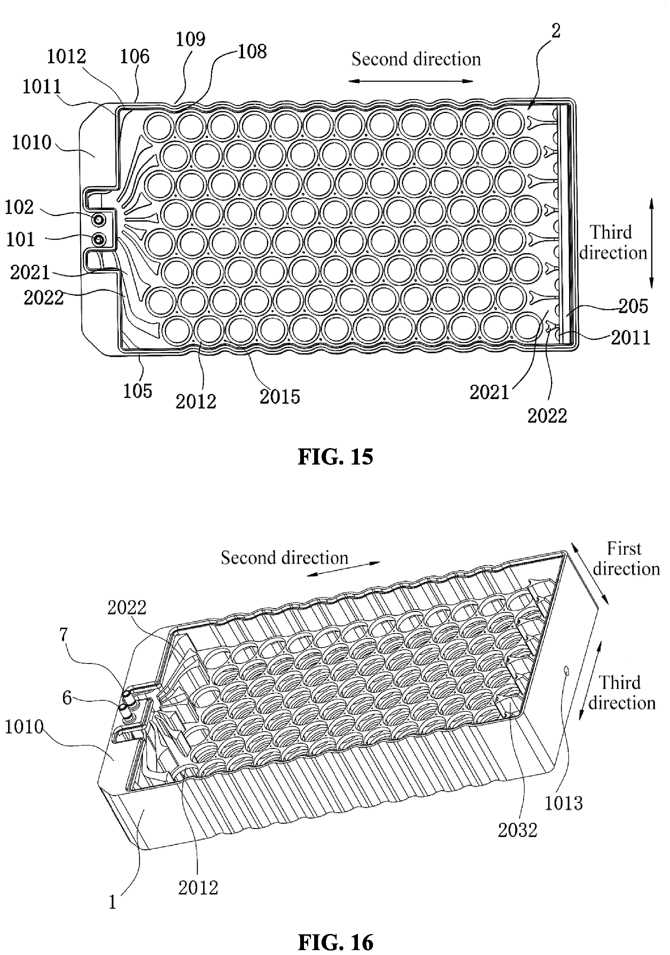

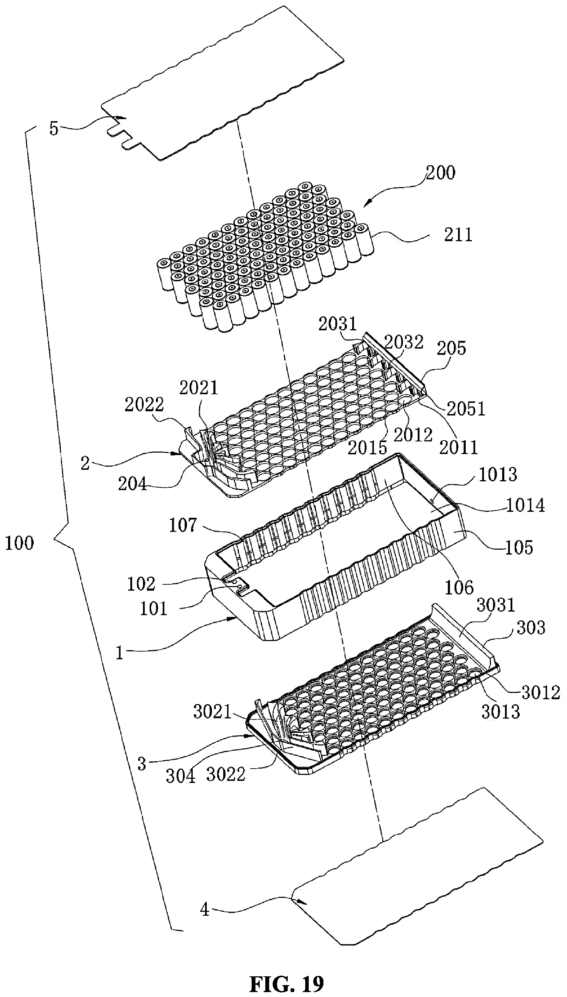

As shown in FIGS. 1 to 3 (with reference to FIGS. 15 to 17, 19 and 22), embodiments of the present application provide a separator 2. The separator 2 is applied to a battery box 100 of a battery pack. In this embodiment, a first direction is a vertical direction (the height direction of the battery box 100, that is, the height direction of the separator 2), a second direction is the length direction of the battery box 100, that is, the length direction of the separator 2, and a third direction is the width direction of the battery box 100, that is, the width direction of the separator 2.

In this embodiment, the separator 2 includes a first body 201 and a first flow guiding assembly 202. The first body 201 is provided with return holes 2011 and multiple mounting holes 2012 passing through the first body 201 in the first direction. The multiple mounting holes 2012 are configured to mount cells 211 of a battery module 200 within the battery box 100 respectively. A liquid outlet region 2013 is formed on the upper side surface of the first body 201 in the first direction and is configured to communicate with a liquid outlet 102 of the battery box 100. A coolant collected in the liquid outlet region 2013 is discharged to the exterior of the battery box 100 through the liquid outlet 102. The liquid outlet region 2013 and the return holes 2011 are adjacent to two ends of the first body 201 in the second direction respectively, that is, the liquid outlet region 2013 and the return holes 2011 are located at two ends of the separator 2 in the length direction. The mounting holes 2012 are located between the liquid outlet region 2013 and the return holes 2011. The first flow guiding assembly 202 and the liquid outlet region 2013 are located on the upper side surface of the first body 201. The first flow guiding assembly 202 includes multiple first flow guiding grooves 2021. One end of each first flow guiding groove 2021 communicates with the liquid outlet region 2013 while the other end of each first flow guiding groove 2021 communicates with a region in which the battery module 200 is located. The first flow guiding assembly 202 is configured to guide the coolant in the region in which the battery module 200 is located to the liquid outlet region 2013.

In the separator 2 in this embodiment, the return holes 2011 pass through the first body 201 so that the coolant on one side surface of the first body 201 away from the liquid outlet region 2013 (that is, the lower side surface of the separator 2) can be introduced into one side surface of the first body 201 provided with the liquid outlet region 2013 (that is, the upper side surface of the separator 2) through the return holes 2011. The return holes 2011 and the liquid outlet region 2013 are adjacent to the two ends of the first body 201 in the second direction respectively so that the cells 211 protruding from the first body 201 can be immersed in the coolant sequentially from the positions at which the multiple return holes 2011 are located, and after heat exchange, the coolant can be collected into the liquid outlet region 2013 and discharged through the liquid outlet 102, improving the heat exchange effect of the cells 211. In addition, the first flow guiding assembly 202 is disposed between the liquid outlet region 2013 and the battery module 200 so that all the coolant at the cells 211 after the heat exchange can be collected into the liquid outlet region 2013 as quickly as possible, and the discharge of the coolant with a high temperature after the heat exchange can be accelerated, improving the cooling effect.

In one or more embodiments, the battery module 200 includes multiple rows of cell groups 210 arranged in the third direction, each row of cell group 210 includes multiple cells 211 arranged in the second direction, the third direction is disposed at an included angle with the first direction and the second direction separately, a flow guiding clearance 220 is formed between at least two adjacent rows of cell groups 210, and multiple first flow guiding grooves 2021 are in one-to-one correspondence with multiple flow guiding clearances 220. The multiple flow guiding clearances 220 between the multiple rows of cell groups 210 are in one-to-one correspondence with the multiple first flow guiding grooves 2021, and after the coolant is introduced into the multiple return holes 2011, the coolant is diverted through the multiple flow guiding clearances 220 so that the chance that each cell 211 in each row of cell group 210 contacts the coolant can be increased. After the multiple first flow guiding grooves 2021 communicate with the multiple flow guiding clearances 220 respectively, most of the coolant after heat exchange between two adjacent rows of cell groups 210 is collected into the liquid outlet region 2013 through the first flow guiding grooves 2021 and then discharged to the exterior of the battery box 100 through the liquid outlet 102 as quickly as possible, reducing the coolant returning to or being mixed into other rows of cell groups 210 after the heat exchange between two adjacent rows of cell groups 210 and thereby preventing the cells 211 from having a low local heat exchange efficiency.

In one or more embodiments, two end surfaces of the first body 201 in the third direction are spaced from hole walls of the mounting holes 2012 to form flow guiding clearances 220 on two sides of the battery module 200 in the third direction respectively. In one or more embodiments, since the mounting holes 2012 are spaced from the two end surfaces of the first body 201 in the third direction, after the cells 211 are mounted, spacings may be formed between the cells 211 and the end surfaces of the first body 201 (that is, the separator 2). After the separator 2 is mounted to the battery box 100, spacings can be formed between the cells 211 and inner sidewalls of the battery box 100. These spacings are also flow guiding clearances 220 for the coolant to pass. The flow guiding clearances 220 at the corresponding positions of the spacings are also provided with corresponding first flow guiding grooves 2021. This can ensure that cells 211 on two sides of the battery module 200 in the third direction can also contact the coolant with a low temperature, thereby ensuring the uniform heat exchange of cells 211 at the positions.

In one or more embodiments, the first flow guiding assembly 202 includes multiple first flow guiding plates 2022 spaced apart, a first flow guiding groove 2021 is formed between two adjacent first flow guiding plates 2022, and ends of the multiple first flow guiding plates 2022 extend into the liquid outlet region 2013 while the other ends of the multiple first flow guiding plates 2022 extend into a region adjacent to the battery module 200. The multiple first flow guiding plates 2022 that are convex outward can reduce the overall thickness of the first body 201, reduce the occupied space of the entire separator 2 within the battery box 100, improve the energy density of the entire battery pack and reduce the region in which the cells 211 are blocked by the first body 201, thereby enabling more regions of the multiple cells 211 to be immersed in the coolant for heat dissipation.

In one or more embodiments, the first flow guiding plates 2022 and the first body 201 are integrally injection molded from plastic. The integral injection molding manner can reduce the mounting and manufacturing difficulty of the first flow guiding plates 2022, reduce the number of parts and lower the cost. Certainly, the first flow guiding plates 2022 may also be manufactured separately and then secured to the first body 201 through bonding, soldering, screw connection or engagement.

In other embodiments, the first flow guiding plates 2022 may also not be separately arranged, but the thickness of the first body 201 is increased, and the first body 201 is grooved to form the first flow guiding grooves 2021.

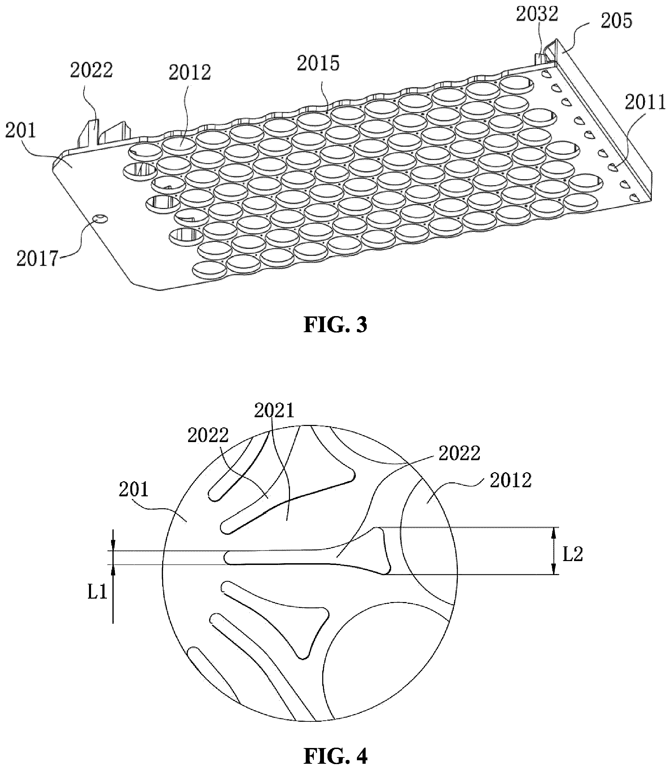

In one or more embodiments, as shown in FIG. 4 (with reference to FIGS. 1 to 3, 15 to 17, 19 and 22), the width of one end of a first flow guiding plate 2022 adjacent to the liquid outlet region 2013 is L1, the width of one end of the first flow guiding plate 2022 adjacent to the cells 211 is L2, and L1 is less than L2. The width of the part of the first flow guiding plate 2022 facing the cells 211 is widened so that the coolant within the flow guiding clearances 220 can be prevented from entering other regions as far as possible. The width of the end of the first flow guiding plate 2022 facing the liquid outlet region 2013 is narrowed to form a collection effect, for the size of the liquid outlet region 2013 is generally designed to be less than the width of the battery module 200 (that is, the size of the battery module 200 in the third direction), so the first flow guiding assembly 202 is required to be tightened up.

The shape of the end surface of one end of the first flow guiding plate 2022 adjacent to the cells 211 matches the appearance of the cells 211. This design is to enable a better matching between the shape of the first flow guiding plate 2022 and the shape of the cells 211 to form a better flow guiding effect so that the coolant within the flow guiding clearances 220 can enter the first flow guiding grooves 2021 with a smaller resistance.

In this embodiment, the cells 211 are cylindrical, and the end surface of the end of the first flow guiding plate 2022 facing the cells 211 is an arcuate surface. Certainly, the cells 211 are not limited to cylindrical and may also be square, polygonal, or specially shaped. In this case, the shape of the end surface of the end of the first flow guiding plate 2022 facing the cells 211 is adjusted according to the appearance of the cells 211.

In addition, the end surface of the end of the first flow guiding plate 2022 adjacent to the cells 211 is spaced from the outer sidewall of the respective cell 211. This design may prevent the first flow guiding plate 2022 from directly abutting against the outer sidewall of the respective cell 211 to further prevent the first flow guiding plate 2022 from blocking the respective cell 211 so that the cells 211 can contact the coolant for heat exchange as much as possible.

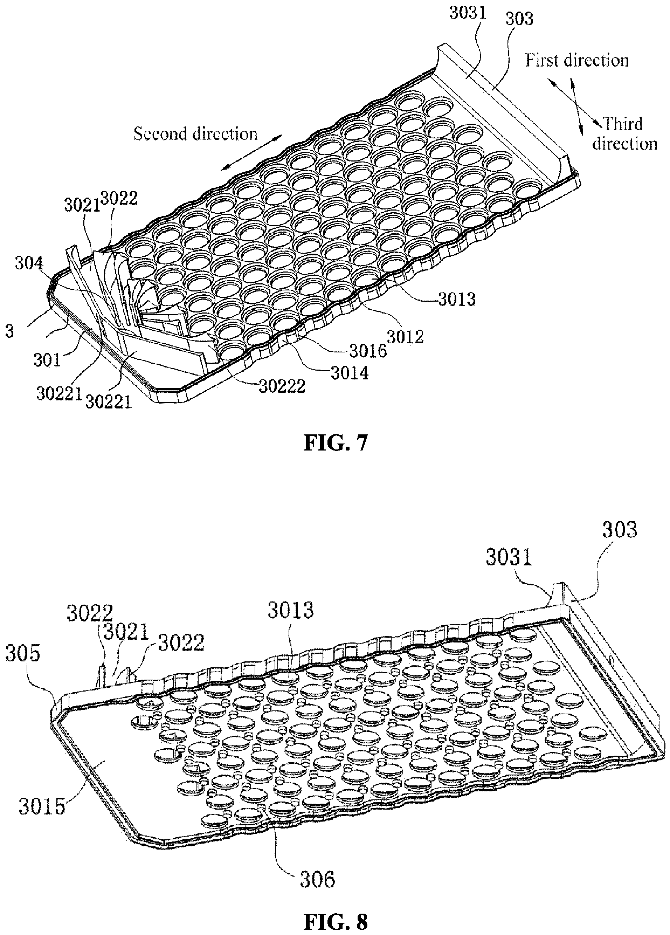

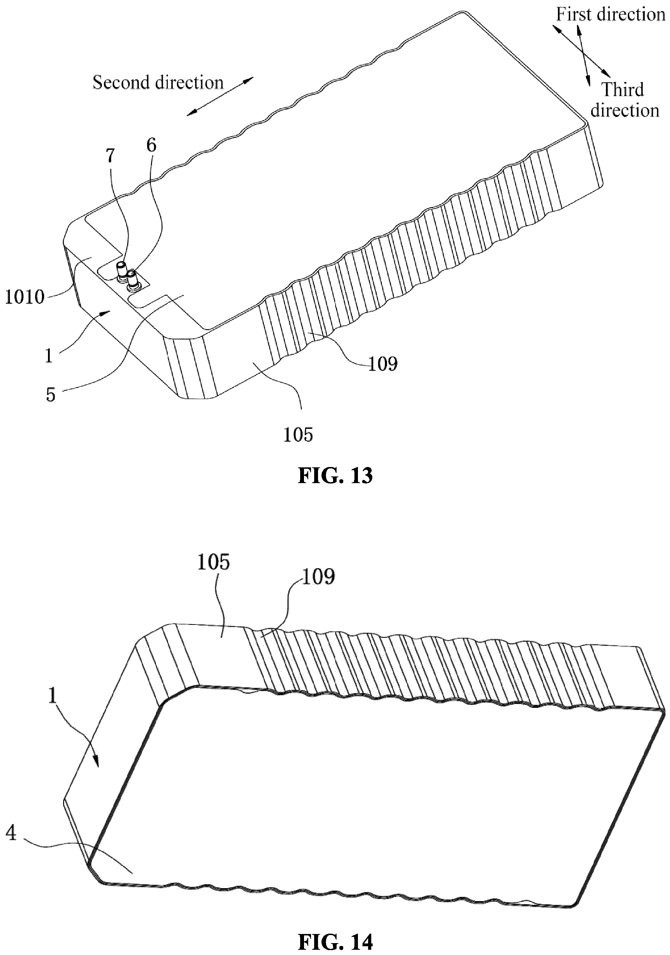

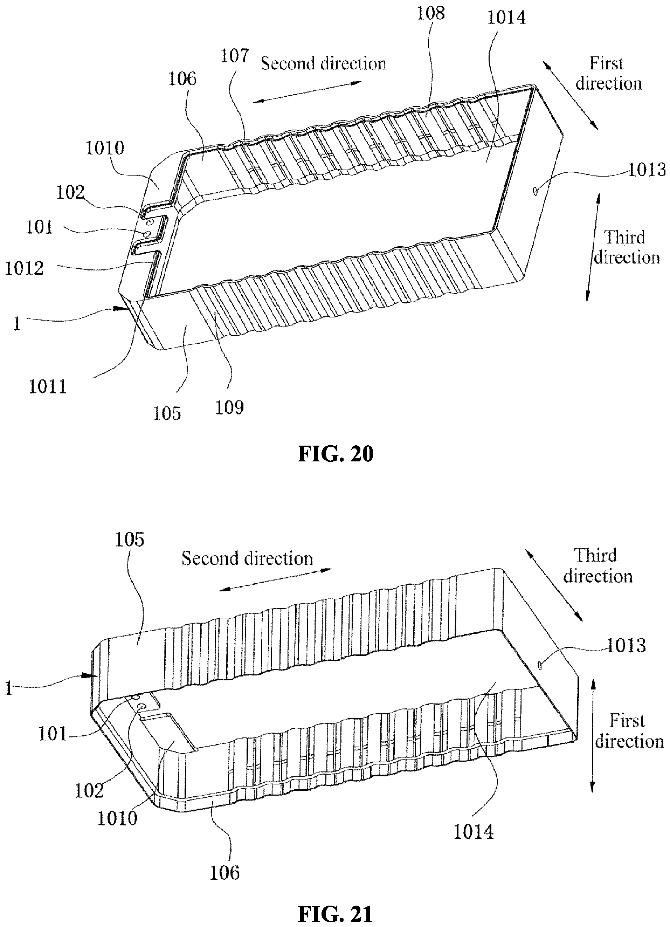

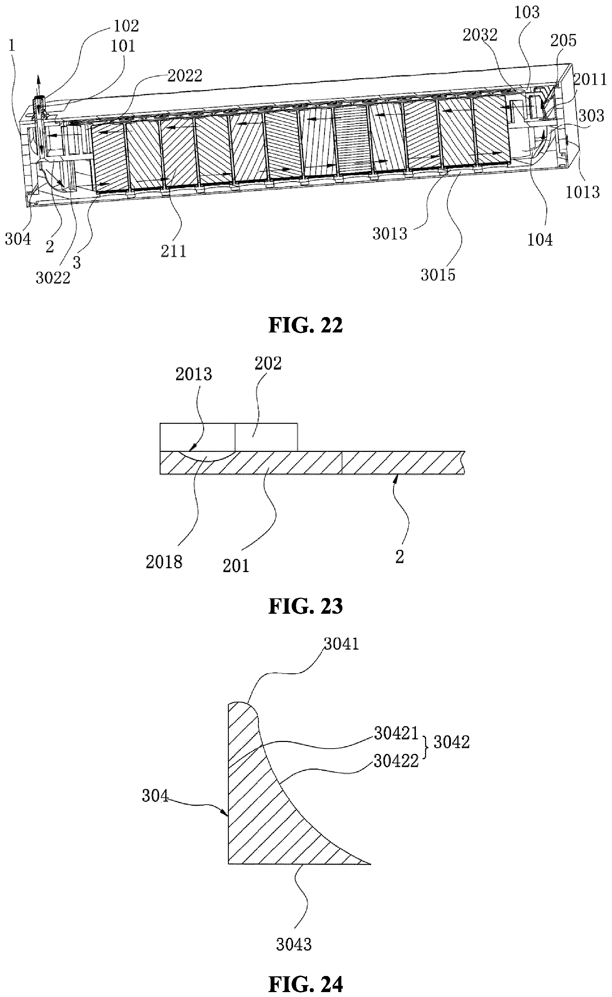

In one or more embodiments, as shown in FIG. 23 (with reference to FIGS. 1 to 22), a collection groove 2018 is concavely disposed on the first body 201 and located in the liquid outlet region 2013, and all the first flow guiding grooves 2021 communicate with the collection groove 2018. The collection groove 2018 concavely disposed can improve the collection effect and accelerate the collection of the coolant within all the first flow guiding grooves 2021 to the collection groove 2018 and reduce the probability of the coolant within all the first flow guiding grooves 2021 returning to the flow guiding clearances 220 of the battery module 200.

In this embodiment, the collection groove 2018 is arcuate. This design can reduce the resistance when the coolant is collected in the collection groove 2018, accelerate the collection of the coolant by the collection groove 2018 and transport the coolant to the exterior of the battery box 100 through the liquid outlet 102 as quickly as possible.

In one or more embodiments, two first flow guiding plates 2022 located on the outermost sides of the first flow guiding assembly 202 in the third direction 202 are first outer flow guiding plates 20221, ends of the two first outer flow guiding plates 20221 away from the respective cells 211 are connected, the rest of the first flow guiding plates 2022 are first inner flow guiding plates 20222, and ends of the first inner flow guiding plates 20222 facing the first outer flow guiding plates 20221 are spaced from inner sidewalls of the first outer flow guiding plates 20221 to form the liquid outlet region 2013. The liquid outlet region 2013 is disposed within the first flow guiding assembly 202, and the two first outer flow guiding plates 20221 are used for blocking the liquid outlet region 2013 so that the coolant introduced by the first flow guiding grooves 2021 can be effectively prevented from entering the exterior of the liquid outlet region 2013.

The two first outer flow guiding plates 20221 may also not be connected, but the two first outer flow guiding plates 20221 are extended. After the separator 2 is mounted to the box body 1 of the battery box 100, the ends of the two first outer flow guiding plates 20221 away from the respective cells 211 abut against the inner sidewall of the box body 1 so that the same effect can also be achieved.

In one or more embodiments, the first body 201 is provided with immersion holes 2015 passing through the first body 201 in the first direction, an immersion hole 2015 is located between adjacent mounting holes 2012 and corresponds to a clearance between adjacent cells 211, and the size of the immersion hole 2015 is less than the size of the return hole 2011. The immersion holes 2015 are disposed so that before the coolant reaches the return holes 2011, the lower region of the first body 201 can be partially immersed in the coolant with a low temperature to perform heat exchange and dissipation on the cells 211 located on the upper region of the first body 201, improving the cooling effect. After entering the flow guiding clearances 220 of the battery module 200 located above the first body 201, the coolant introduced by the return holes 2011 is mixed with the part of the coolant passing through the immersion holes 2015 to perform heat exchange and dissipation on the cells 211. The temperature of the coolant on the upper region of the first body 201 is higher than the temperature of the coolant on the lower region of the first body 201. To achieve the same heat dissipation effect of the upper portion and lower portion of the cells 211, the immersion holes 2015 have the effect of supplementing the coolant with a low temperature, and the coolant with a low temperature is mixed with the coolant introduced by the return holes 2011 to decrease the temperature of the coolant on the upper region of the first body 201. The size of the immersion hole 2015 is less than the size of the return hole 2011 so that the amount of the coolant passing through the immersion holes 2015 can be reduced to prevent the amount of the coolant at the return holes 2011 from being affected and cells 211 adjacent to the return holes 2011 can maintain a normal heat exchange and dissipation effect.

In this embodiment, the sum of areas of all immersion holes 2015 on the first body 201 is S1, the area of the first body 201 is S2, and the relationship ratio of S1 to S2 may be 1:25000 to 3:50000. For example, the relationship ratio of S1 to S2 may be 1:25000, 1:20000, or 3:50000. After the sum S1 of the areas of all the immersion holes 2015 satisfies the preceding relationship, a reasonable immersion amount can be maintained, and the case where the flow rate of the coolant at the return holes 2011 is affected due to an excessively large immersion amount can be prevented.

The area of a single immersion hole 2015 is S3, the area of a single return hole 2011 is S4, and the relationship ratio of S3 to S4 may be 2:25 to 1:8. For example, the relationship ratio of S3 to S4 may be 2:25, 2:23, 2:20, 2:18, 2:17, or 1:8. The area of the single immersion hole 2015 is required to be much smaller than the area of the single return hole 2011, which facilitates the flow of most of the coolant to the upper region of the first body 201 through the return holes 2011, pushes the coolant to flow to the liquid outlet region 2013 and reduces disturbed flows.

The sum of the areas of all the immersion holes 2015 on the first body 201 is S1, the sum of areas of all return holes 2011 on the first body 201 is S5, and the relationship ratio of S1 to S5 may be 1:2 to 2:3. For example, the relationship ratio of S1 to S5 may be 1:2, 1: 1.92, 1:1.85, 1: 1.79, 1: 1.72, 1: 1.67, 1: 1.61, 1: 1.56, or 2:3. The multiple immersion holes 2015 are configured to infiltrate the coolant to change heat with the cells 211 to improve the overall cooling uniformity of the cells 211 and lowering the temperature difference. The sum of the areas of all the immersion holes 2015 is required to be less than the sum of the areas of all the return holes 2011, which facilitates the return of the coolant to the upper region of the first body 201 through the return holes 2011, pushes the coolant to flow to the liquid outlet region 2013 and reduces disturbed flows.

In this embodiment, the immersion holes 2015 are circular. In other embodiments, the immersion holes 2015 may also be at least one of semicircular holes, elliptical holes, square holes, polygonal holes, or specially-shaped holes. For example, both circular immersion holes 2015 and semicircular immersion holes 2015 are disposed on the first body 201.

In this embodiment, the return hole 2011 is semicircular. The arcuate hole wall 20111 of the return hole 2011 is located on one side of the flat hole wall 20112 of the return hole 2011 facing the respective cell 211.

In one or more embodiments, the multiple return holes 2011 are spaced apart on the first body 201 in the third direction. The number of return holes 2011 is the same as the number of flow guiding clearances 220 of the battery module 200, and the positions of the multiple return holes 2011 are also in one-to-one correspondence with the positions of the multiple flow guiding clearances 220, that is, one flow guiding clearance 220 corresponds to one return hole 2011. This design enables the coolant to be uniformly diverted to the corresponding flow guiding clearances 220 as much as possible when the coolant is introduced from the lower portion of the first body 201 to the upper portion of the first body 201 through the multiple return holes 2011 to improve the heat exchange and dissipation effect of the coolant on each cell 211.

A blocking plate 205 is also disposed on the first body 201 and located between the multiple return holes 2011 and the end surface of one end of the first body 201 adjacent to the multiple return holes 2011 in the second direction. The length of the blocking plate 205 extends along the third direction. The blocking plate 205 protrudes from one side surface of the first body 201 provided with the first flow guiding assembly 202 (that is, the blocking plate 205 protrudes from the upper side surface of the first body 201). The multiple return holes 2011 each still have a certain distance from an end portion of the first body 201. After the separator 2 is mounted to the box body 1, the multiple return holes 2011 each still have a space from the box body 1. If the blocking plate 205 is not disposed, when the coolant enters the upper portion of the first body 201 from the multiple return holes 2011, a portion of the coolant is highly likely to be accumulated in this space and cannot enter the flow guiding clearances 220 of the battery module 220 smoothly for heat exchange, so the blocking plate 205 is disposed so that the coolant can be effectively prevented from lingering in the spaces between the hole walls of the multiple return holes 2011 and the box body 1 and all the coolant entering the upper portion of the first body 201 through the multiple return holes 2011 from the lower portion of the first body 201 can enter the multiple flow guiding clearances 220 of the battery module 200 for heat exchange. In one or more embodiments, two ends of the blocking plate 205 in the third direction abut against two inner sidewalls of the box body 1 in the third direction respectively. This design is to reduce lingering phenomena caused by the coolant entering regions of the two ends of the blocking plate 205 in the third direction.

In one or more embodiments, one side surface of the blocking plate 205 facing the multiple return holes 2011 is provided with an inclined blocking plate flow guiding surface 2051. The blocking plate flow guiding surface 2051 is inclined from one end facing the first body 201 to one end away from the first body 201 and toward one side on which the first flow guiding assembly 202 is located (that is, the side surface of the blocking plate 205 facing the multiple return holes 2011 is provided with the inclined blocking plate flow guiding surface 2051, and the blocking plate flow guiding surface 2051 extends from the end facing the first body 201 to the end away from the first body 201 in the first direction and is inclined in a direction facing the first flow guiding assembly 202 in the second direction). The inclined blocking plate flow guiding surface 2051 can guide the coolant introduced by the multiple return holes 2011 to the side on which the first flow guiding assembly 202 and the battery module 200 are located, thereby accelerating the coolant into the multiple flow guiding clearances 220. In one or more embodiments, one side edge of the blocking plate flow guiding surface 2051 adjacent to the first body 201 is flush with flat hole walls 20112 of the multiple return holes 2011. This design can ensure that the coolant introduced by the multiple return holes 2011 can be fully guided by the blocking plate flow guiding surface 2051, the resistance applied by the blocking plate 205 to the coolant is reduced, and the flow of the coolant is accelerated.

The return hole 2011 is not limited to semicircular. The return holes 2011 may also be at least one of circular holes, elliptical holes, square holes, polygonal holes, or specially-shaped holes. For example, both semicircular return holes 2011 and circular return holes 2011 are disposed on the first body 201. In addition, the return holes 2011 are not limited to being multiple, and only one return hole 2011 may also be provided. When only one return hole 2011 is provided, the length of the one return hole 2011 may extend along the third direction to facilitate the transmission of the coolant to all the flow guiding clearances 220 by the one return hole 2011.

The blocking plate 205 and the first body 201 are formed separately. The lower surface of the blocking plate 205 abuts against the upper side surface of the first body 201. To prevent the coolant from entering the position at which the blocking plate 205 abuts against the first body 201, a sealing gasket is also disposed between the blocking plate 205 and the first body 201. In other embodiments, the blocking plate 205 and the first body 201 may also be integrally formed by injection molding to reduce the manufacturing difficulty.

In addition, the interior of the blocking plate 205 may also be a hollow structure. The hollow structure can reduce the weight of the blocking plate 205, thereby reducing the weight of the entire separator 2.

In one or more embodiments, a second flow guiding assembly 203 is disposed on the first body 201 and adjacent to the return holes 2011, the second flow guiding assembly 203 and the first flow guiding assembly 202 are located on the same side surface of the first body 201, that is, the second flow guiding assembly 203 is also located on the upper side surface of the first body 201, the second flow guiding assembly 203 includes multiple second flow guiding grooves 2031, and all the second flow guiding grooves 2031 communicate with the multiple return holes 2011 respectively and the region in which the battery module 200 is located. The second flow guiding assembly 203 is disposed so that the second flow guiding assembly 203 can directionally guide the coolant from the multiple return holes 2011 to guide the coolant from the multiple return holes 2011 to the battery module 200 for heat dissipation as far as possible. The multiple second flow guiding grooves 2031 are disposed to disperse the coolant to ensure that the heat of the cell 211 at each position of the battery module 200 can be dissipated uniformly as much as possible.

In this embodiment, the multiple second flow guiding grooves 2031 are in one-to-one correspondence with the multiple flow guiding clearances 220. The positions and the number of the multiple second flow guiding grooves 2031 correspond to the positions and the number of the multiple flow guiding clearances 220 so that the coolant introduced by the multiple return holes 2011 can pass through the second flow guiding grooves 2031, the flow guiding clearances 220 and the first flow guiding grooves 2021 sequentially to be collected in the liquid outlet region 2013, and the mixed flow of the coolant at the second flow guiding assembly 203 can be reduced as far as possible, thereby preventing the cells 211 from having a low local heat exchange efficiency.

In one or more embodiments, each second flow guiding groove 2031 communicates with a respective return hole 2011. This design is to achieve a uniform diversion to ensure the uniform flow and temperature of the coolant within each flow guiding clearance 220, thereby ensuring the uniform heat dissipation of the cells 211 in each row of cell group 210. Certainly, each second flow guiding groove 2031 is not limited to communicating with only one return hole 2011, and each second flow guiding groove 2031 may also communicate with two or more return holes 2011. For all the second flow guiding grooves 2031, the same number of return holes 2011 may be provided to communicate with each second flow guiding groove 2031, or different numbers of return holes 2011 may also be provided to correspond to each second flow guiding groove 2031. If heat generated by cells 211 in a middle portion of the battery module 200 is higher than heat generated by cells 211 on the two sides of the battery module 200 in the third direction, the number of return holes 2011 corresponding to the cells 211 in the middle portion may be increased so that second flow guiding grooves 2031 at the middle portion can communicate with more return holes 2011, increasing the amount of the coolant at the corresponding position.

In this embodiment, the second flow guiding assembly 203 includes multiple second flow guiding plates 2032 spaced apart, a second flow guiding groove 2031 is formed between two adjacent second flow guiding plates 2032, and ends of the multiple second flow guiding plates 2032 extend into a region adjacent to the cells 211. The multiple convex second flow guiding plates 2032 can reduce the overall thickness of the first body 201, reduce the occupied space of the entire separator 2 within the battery box 100, improve the energy density of the entire battery pack and reduce the region of the multiple cells 211 blocked by the first body 201, thereby enabling more regions of the cells 211 to be immersed in the coolant for heat dissipation.

In one or more embodiments, the multiple second flow guiding plates 2032 and the first body 201 are integrally injection molded from plastic. The integral injection molding manner may reduce the mounting and manufacturing difficulty of the multiple second flow guiding plates 2032, reduce the number of parts and lower the cost. Certainly, the multiple second flow guiding plates 2032 may also be manufactured separately and then secured to the first body 201 through bonding, soldering, screw connection or engagement.

In other embodiments, the multiple second flow guiding plates 2032 may also not be separately manufactured, but the thickness of the first body 201 is increased, and the first body 201 is grooved to form the multiple second flow guiding grooves 2032.

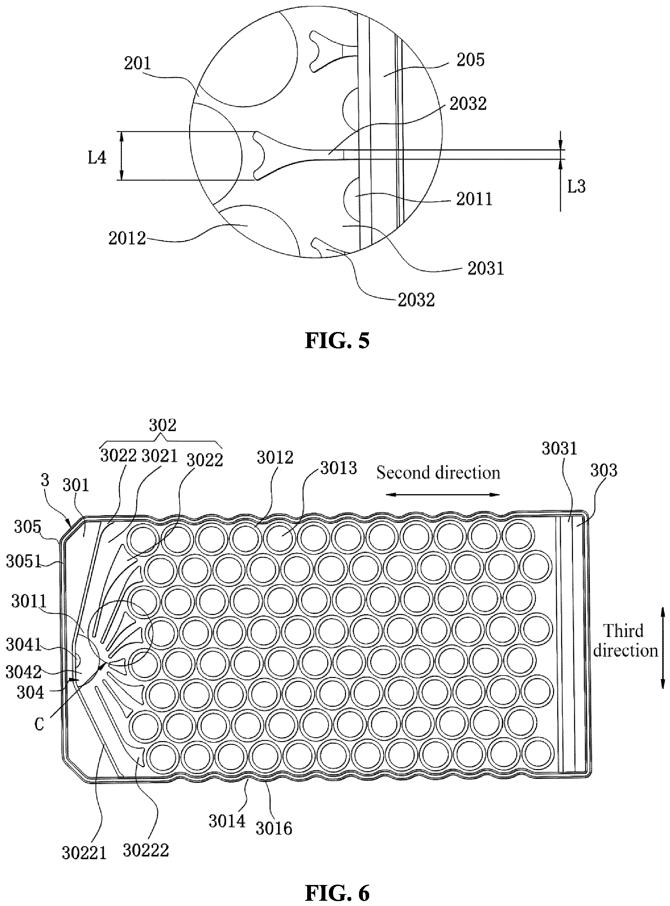

In one or more embodiments, as shown in FIG. 5 (with reference to FIGS. 1 to 3, 15 to 17, 19 and 22), the width of one end of a second flow guiding plate 2032 away from the liquid outlet region 2013 is L3, the width of one end of the second flow guiding plate 2032 adjacent to the liquid outlet region 2013 is L4, and L3 is less than L4. The width of the end of the second flow guiding plate 2032 facing the respective cell 211 is widened so that the coolant within the flow guiding clearances 220 can be prevented from entering other regions as far as possible. The width of the end of the second flow guiding plate 2032 away from the liquid outlet region 2013 is narrowed for avoidance of the opening positions of the return holes 2011 to prevent the multiple return holes 2011 from being blocked.

The shape of the end surface of the end of the second flow guiding plate 2032 adjacent to the liquid outlet region 2013 matches the appearance of the respective cell 211. This design is to enable a better matching between the shape of the second flow guiding plate 2032 and the shape of the respective cell 211 to form a better flow guiding effect so that the coolant within the multiple second flow guiding grooves 2031 can enter the multiple flow guiding clearances 220 with a smaller resistance.

In this embodiment, the end surface of one end of the second flow guiding plate 2032 facing the respective cell 211 is an arcuate surface. Certainly, when the cells 211 have other shapes, the shape of the end surface of the end of the second flow guiding plate 2032 facing the respective cell 211 is adjusted according to the appearance of the respective cell 211.

In addition, the end surface of the end of the second flow guiding plate 2032 adjacent to the respective cell 211 is spaced from the outer sidewall of the respective cell 211. This design may prevent the second flow guiding plate 2032 from directly abutting against the outer sidewall of the respective cell 211 to further prevent the second flow guiding plate 2032 from blocking the respective cell 211 so that the cells 211 can contact the coolant for heat exchange as much as possible.

In one or more embodiments, a liquid inlet pipe 204 is disposed on the first body 201 and secured to the liquid outlet region 2013, the liquid outlet region 2013 is provided with a via 2017 communicating with the liquid inlet pipe 204, and the via 2017 passes through the first body 201. The liquid inlet pipe 204 is disposed to facilitate the introduction of a liquid in the liquid inlet 101 into the lower region of the first body 201 and avoid the mixture of the coolant in the liquid inlet 101 and the liquid outlet region 2013. After the separator 2 is mounted to the box body 1, the coolant first enters the lower region of the separator 2 for heat exchange and dissipation, then passes through the multiple return holes 2011 to enter the upper region of the separator 2, and the cells 211 are immersed in the coolant from the positions facing the multiple return holes 2011 to the positions facing the liquid outlet region 2013 for heat exchange and dissipation.

The liquid inlet pipe 204 is not limited to being secured to the liquid outlet region 2013, and a portion of the liquid inlet pipe 204 may extend into the lower region of the first body 201 after the liquid inlet pipe 204 directly passes through the via 2017. The liquid inlet pipe 204 may also not be disposed. The liquid inlet 101 is directly disposed at the lower region of the first body 201, that is, the liquid inlet 101 directly communicates with the lower region of the first body 201.

In addition, the first body 201, the multiple first flow guiding plates 2022, the multiple second flow guiding plates 2032 and the liquid inlet pipe 204 are integrally injection molded from plastic. The integral injection molding manner has a low manufacturing cost and a small number of parts and facilitates easy mounting. Components on the first body 201, such as the first flow guiding plates 2022, the second flow guiding plates 2032 and the liquid inlet pipe 204, may also be manufactured separately and secured to the first body 201 through soldering, bonding, screw connection, or engagement.

In one or more embodiments, two end surfaces of the first body 201 in the third direction are provided with first recess groups, each first recess group includes multiple first recesses 2016 spaced apart in the second direction, and a first recess 2016 is recessed to a region between two adjacent mounting holes 2012. The multiple first recesses 2016 are disposed so that the space at two ends of the first body 201 in the third direction can be reduced. Because the widths of the multiple flow guiding clearances 220 between adjacent cell groups 210 are consistent when the multiple cells 211 have the same size, if flow guiding clearances 220 located on two sides of the battery module 200 in the third direction do not have first recesses 2016, the flow guiding clearances 220 with inconsistent widths are formed. This enables the cells 211 on the two sides of the battery module 200 and the cells 211 in the middle of the battery module 200 to have different cooling effects. In one or more embodiments, the multiple first recesses 2016 are arcuate, and two adjacent first recesses 2016 are connected through an arcuate first protrusion 2014 to enable the end surface of the first body 201 in the third direction to form a corrugated surface.

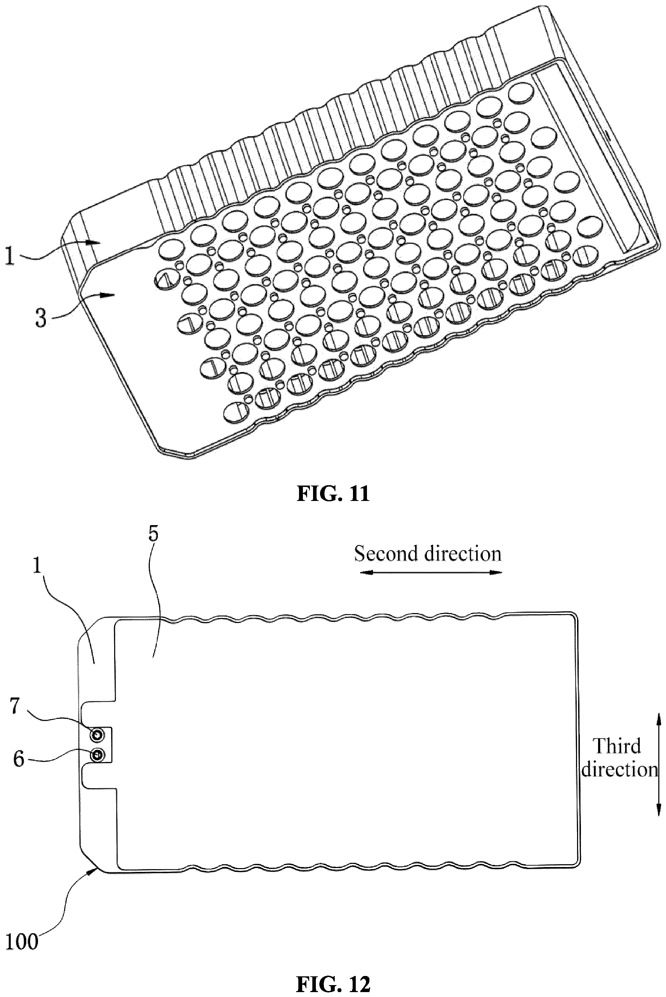

With reference to FIGS. 12 to 16 (some reference numerals are the same as those in FIGS. 1 to 3 and 17 to 22), embodiments of the present application further provide the battery box 100. The battery box 100 includes the box body 1. An accommodation cavity is disposed within the box body 1. The battery box 100 further includes the separator 2 provided in the embodiments of the present application. The separator 2 is disposed within the box body 1 and divides the accommodation cavity into an upper first cavity 103 and a lower second cavity 104 that are independent of each other. The first flow guiding assembly 202, the second flow guiding assembly 203 and the blocking plate 205 that are on the separator 2 are located within the first cavity 103. The liquid inlet 101 communicates with the second cavity 104. The multiple cells 211 are secured within the multiple mounting holes 2012 of the first body 201 respectively. Ends of the multiple cells 211 extend into the first cavity 103 while the other ends of the multiple cells 211 extend into the second cavity 104. The liquid inlet 101 transmits the coolant into the second cavity 104. The coolant flows from one end of the second cavity 104 which faces the separator 2 and is provided with the first flow guiding assembly 202 to one end at which the return holes 2011 are located to immerse the multiple cells 211 in the coolant for heat exchange and dissipation. The coolant then enters the first cavity 103 through the return holes 2011. Under the guide effect of the blocking plate flow guiding surface 2051 of the blocking plate 205, the coolant is diverted to the multiple second flow guiding grooves 2031 of the second flow guiding assembly 203. The coolant is collected into the liquid outlet region 2013 through the multiple flow guiding clearances 220 of the battery module 200 and the multiple first flow guiding grooves 2021. Finally, the coolant is discharged through the liquid outlet 102.

The battery box 100 is separated by the separator 2 to form the first cavity 103 and the second cavity 104 independent of each other. Under the joint effect of the first flow guiding assembly 202, the second flow guiding assembly 203, the blocking plate 205 and the return holes 2011 that are on the separator 2, the heat of the cells 211 is effectively exchanged and dissipated to prevent local cells 211 from aging due to uneven heat dissipation, prolonging the service life of the entire battery module 200.

In addition, when the cells 211 are mounted to the multiple mounting holes 2012 respectively, securing and sealing are performed through a sealant to prevent the cells 211 from shifting on the separator 2, and the coolant on the upper region of the separator 2 (that is, the coolant within the first cavity 103) is prevented from entering the lower region of the separator 2 (that is, the second cavity 104) through clearances between the cells 211 and hole walls of the multiple mounting holes 2012, effectively avoiding a mixture of the coolant.

In other embodiments, the first direction is not limited to the vertical direction, and the first direction may also be horizontal, that is, when the battery box 100 is placed vertically, the first direction is the horizontal direction. Moreover, the second direction is also not limited to the length direction of the battery box 100, and the third direction is not limited to the width direction of the battery box 100, so the second direction may also be the width direction of the battery box 100, and the third direction may also be the length direction of the battery box 100. Limitations on the directions are not repeated herein.

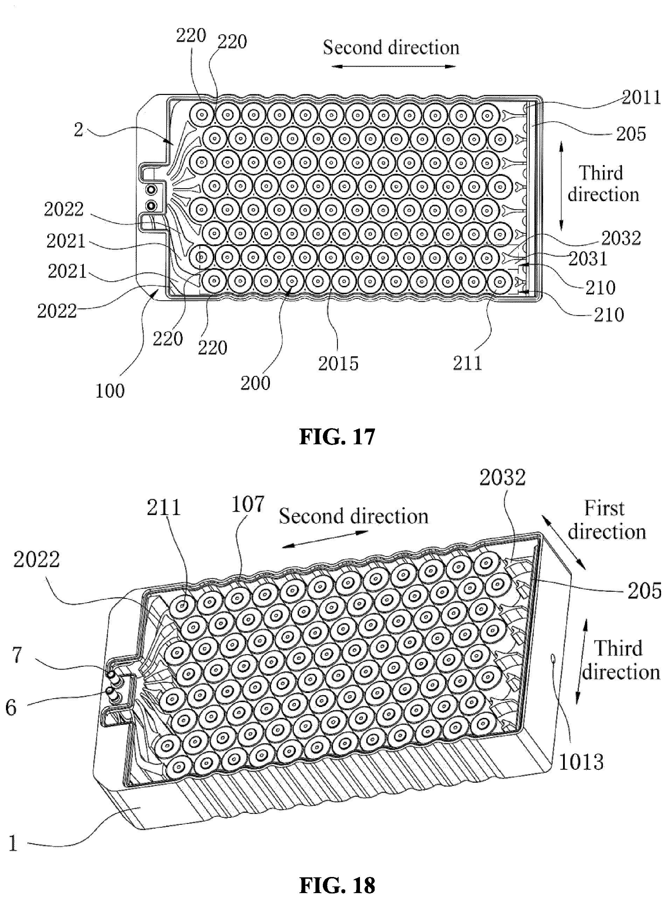

With reference to FIGS. 17 to 22, embodiments of the present application further provide a battery pack. The battery pack includes the battery box 100 and the battery module 200. The accommodation cavity is disposed within the battery box 100. The battery module 200 is disposed within the accommodation cavity. The structure of the battery box 100 is not repeated. As shown in FIGS. 6 to 8 (with reference to FIGS. 15 to 17, 19 and 22), embodiments of the present application provide a tray 3. The tray 3 is applied to the battery box 100. In this embodiment, the first direction is the vertical direction, the second direction is the length direction of the battery box 100, that is, the length direction of the tray 3, and the third direction is the width direction of the battery box 100, that is, the width direction of the tray 3.

In this embodiment, the tray 3 includes a second body 301, a third flow guiding assembly 302 and a drainage plate 303. A liquid inlet region 3011 is disposed on the second body 301, configured to communicate with the liquid inlet 101 of the battery box 100 and disposed on the upper side surface of the second body 301 in the first direction. The third flow guiding assembly 302 is also located on the upper side surface of the second body 301 in the first direction and includes multiple third flow guiding grooves 3021. Ends of all the third flow guiding grooves 3021 communicate with the liquid inlet region 3011 while the other ends of all the third flow guiding grooves 3021 communicate with the region in which the battery module 200 is located. The third flow guiding assembly 302 is configured to disperse and guide the coolant in the liquid inlet region 3011 to the battery module 200. The drainage plate 303 is also located on the upper side surface of the second body 301 in the first direction. The drainage plate 303 and the third flow guiding assembly 302 are adjacent to the two ends of the second body 301 in the second direction respectively. One side surface of the drainage plate 303 facing the third flow guiding assembly 302 is provided with a drainage surface 3031.

In this embodiment, the liquid inlet region 3011 and the third flow guiding assembly 302 are disposed in the tray 3. The liquid inlet region 3011 is configured to receive the coolant from the liquid inlet 101 of the battery box 100. After dispersing the coolant in the liquid inlet region 3011, the third flow guiding assembly 302 guides the coolant to the battery module 200 so that the battery module 200 can be immersed in the coolant more uniformly for heat exchange and dissipation, improving the heat dissipation effect of the battery module 200. The drainage plate 303 is disposed so that the drainage plate 303 can drain the coolant that has undergone heat exchange with the battery module 200 to other regions for heat exchange or to the exterior of the battery box 100, ensuring the smooth operation of heat exchange in other regions and decreasing the probability of the coolant returning to the heat-exchanged battery module 200.

In this embodiment, the drainage surface 3031 is an arcuate surface that is concave toward one side away from the third flow guiding assembly 302. The drainage surface 3031 is a concave arc surface so that the resistance of the coolant on the drainage surface 3031 can be reduced, ensuring that the coolant can be quickly drained to the other regions for the heat exchange or to the exterior of the battery box 100. The drainage surface 3031 is not limited to the concave arc surface and may also be an inclined surface. In one or more embodiments, the drainage surface 3031 is inclined from one end adjacent to the second body 301 to one end away from the second body 301 and toward one side away from the third flow guiding assembly 302, that is, the drainage surface 3031 is inclined toward the side away from the third flow guiding assembly 302 from bottom to top. The inclined drainage surface 3031 can also reduce the resistance of the coolant.

In one or more embodiments, the battery module 200 includes multiple rows of cell groups 210 arranged in the third direction, each row of cell group 210 includes multiple cells 211 arranged in the second direction, a flow guiding clearance 220 is formed between at least two adjacent rows of cell groups 210, and the multiple third flow guiding grooves 3021 are in one-to-one correspondence with the multiple flow guiding clearances 220. The multiple flow guiding clearances 220 between the multiple rows of cell groups 210 are in one-to-one correspondence with the multiple third flow guiding grooves 3021 so that when the coolant that has been cooled externally enters the liquid inlet region 3011, the coolant can be diverted through the multiple third flow guiding grooves 3021, and the multiple flow guiding clearances 220 that are in the position correspondence and communicate with the multiple third flow guiding grooves 3021 can receive the diverted coolant, the chance that each cell 211 of each row of cell group 210 contacts the coolant can be increased and the cooling temperature is relatively uniform. Moreover, through the drainage surface 3031, the coolant that has undergone the heat exchange is drained to other regions for heat exchange or to the exterior of the battery box 100, reducing the coolant returning to or being mixed into other rows of cell groups 210 after the heat exchange between two adjacent rows of cell groups 210 and thereby preventing the case where cells 211 have a low local heat exchange efficiency.

In one or more embodiments, two end surfaces of the second body 301 in the third direction are spaced from the outer sidewall of the battery module 200 to form flow guiding clearances 220 on the two sides of the battery module 200 in the third direction respectively. In one or more embodiments, during the mounting, the two sides of the battery module 200 in the third direction do not directly abut against the inner sidewall of the battery box 100. To avoid the case of poor heat dissipation because a certain portion of the cells 211 cannot be immersed in the coolant, the flow guiding clearances 220 formed on the two sides of the battery module 200 in the third direction have third flow guiding grooves 3021 correspondingly, and the coolant entering the liquid inlet region 3011 can also enter the flow guiding clearances 220 on the two sides of the battery module 200 in the third direction through the third flow guiding grooves 3021 at the positions, ensuring that each cell 211 can be immersed in the coolant for heat exchange and dissipation and thereby ensuring the uniform heat exchange of all cells 211.

In one or more embodiments, the third flow guiding assembly 302 includes multiple third flow guiding plates 3022 spaced apart, a third flow guiding groove 3021 is formed between two adjacent third flow guiding plates 3022, and ends of the multiple third flow guiding plates 3022 extend into the liquid inlet region 3011 while the other ends of the multiple third flow guiding plates 3022 extend into the region adjacent to the battery module 200. The multiple convex third flow guiding plates 3022 can reduce the overall thickness of the second body 301, reduce the occupied space of the entire tray 3 within the battery box 100 and improve the energy density of the entire battery pack.

In one or more embodiments, the multiple third flow guiding plates 3022 and the second body 301 are integrally injection molded from plastic. The integral injection molding manner may reduce the mounting and manufacturing difficulty of the multiple third flow guiding plates 3022, reduce the number of parts and lower the cost. Certainly, the multiple third flow guiding plates 3022 may also be manufactured separately and then secured to the second body 301 through bonding, soldering, screw connection or engagement.

In other embodiments, the multiple third flow guiding plates 3022 may also not be separately manufactured, but the thickness of the second body 301 is increased, and the second body 301 is grooved to form the multiple third flow guiding grooves 3021. This design requires the cells 211 to be at least partially embedded into the second body 301 so that the multiple third flow guiding grooves 3021 can disperse and drain the coolant.

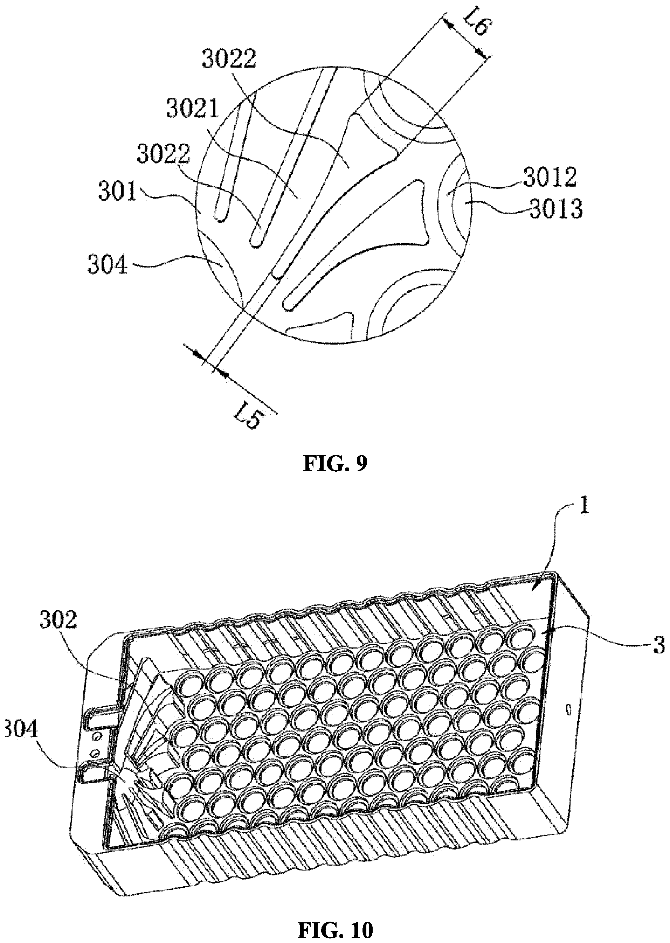

In some embodiments, as shown in FIG. 9 (with reference to FIGS. 6 to 8, 15 to 17, 19 and 22), the width of one end of a third flow guiding plate 3022 adjacent to the liquid inlet region 3011 is L5, the width of one end of the third flow guiding plate 3022 adjacent to a respective cell 211 is L6, and L5 is less than L6. The width of the part of the third flow guiding plate 3022 facing the respective cell 211 is wider so that the coolant within the multiple flow guiding clearances 220 can be prevented from entering other regions as far as possible. The width of the end of the third flow guiding plate 3022 facing the liquid inlet region 3011 is narrowed to form a collection effect, for the size of the liquid inlet region 3011 is generally designed to be less than the width of the battery module 200 (that is, the size of the battery module 200 in the third direction), so the third flow guiding assembly 302 is required to be tightened up to help the coolant to be smoothly guided to all the third flow guiding grooves 3021 from the liquid inlet region 3011.

The shape of the end surface of one end of the third flow guiding plate 3022 adjacent to the respective cell 211 matches the appearance of the respective cell 211. This design is to enable a better matching between the shape of the third flow guiding plate 3022 and the shape of the respective cell 211 to form a better flow guiding effect so that the coolant within the multiple third flow guiding grooves 3021 can enter the multiple flow guiding clearances 220 with a smaller resistance. In this embodiment, the cell 211 is cylindrical, and the end surface of one end of the third flow guiding plate 3022 facing the respective cell 211 is an arcuate surface. Certainly, the cell 211 is not limited to cylindrical and may also be square, polygonal, or specially shaped. In this case, the shape of the end surface of the end of the third flow guiding plate 3022 facing the respective cell 211 is adjusted according to the appearance of the respective cell 211.

In addition, the end surface of the end of the third flow guiding plate 3022 adjacent to the respective cell 211 is spaced from the outer sidewall of the respective cell 211. This design may prevent the third flow guiding plate 3022 from directly abutting against the outer sidewall of the respective cell 211 to further prevent the third flow guiding plate 3022 from blocking the respective cell 211 so that the multiple cells 211 can contact the coolant for heat exchange as much as possible.

In some embodiments, a diverter 304 protrudes from the second body 301 and is located in the liquid inlet region 3011. The diverter 304 is disposed so that the coolant transmitted by the liquid inlet 101 can be diverted, preventing the coolant from being locally accelerated to flow to a certain third flow guiding groove 3021. The diverter 304 first diverts the coolant once, and then the diverted coolant may be basically transmitted to each third flow guiding groove 3021 uniformly, thereby ensuring that each flow guiding clearance 220 can obtain the coolant with the same temperature and the consistent flow amount, ensuring the same cooling effect of each cell 211, reducing the temperature difference of each cell 211 and prolonging the service life of the entire battery module 200.

In this embodiment, at least part of the outer sidewall of the diverter 304 is an arcuate surface, and the cross-section size of one end of the diverter 304 away from the second body 301 is less than the cross-section size of one end of the diverter 304 connected to the second body 301. The outer sidewall of the diverter 304 has the arcuate surface so that the splashing of the coolant transmitted by the liquid inlet 101 at the diverter 304 can be reduced, ensuring that the coolant can be diverted and conforms the outer sidewall of the diverter 304. Moreover, the structure with a small upper end and a large lower end can form a good diversion effect, and the lower end of the diverter 304 forms a dispersed structure to ensure the uniform diversion of the coolant.

In some embodiments, as shown in FIG. 24 (with reference to FIGS. 1 to 22), two third flow guiding plates 3022 located on outermost sides of the third flow guiding assembly 302 in the third direction are third outer flow guiding plates 30221, ends of the two third outer flow guiding plates 30221 away from the cells 211 are connected, the rest of the multiple third flow guiding plates 3022 are third inner flow guiding plates 30222, and ends of the third inner flow guiding plates 30222 away from the cells 211 are spaced from inner sidewalls of the two third outer flow guiding plates 30221 to form the liquid inlet region 3011. The diverter 304 includes a diversion outer peripheral surface 3042, a diversion bottom surface 3043 and a diversion top surface 3041, the diversion top surface 3041 and the diversion bottom surface 3043 are spaced apart in the first direction, the diversion outer peripheral surface 3042 is connected to the diversion top surface 3041 and the diversion bottom surface 3043, the diversion bottom surface 3043 is connected to the second body 301, the size of the diversion top surface 3041 is less than the size of the diversion bottom surface 3043, and the diversion outer peripheral surface 3042 includes a connection surface 30421 and a diversion guide surface 30422 that are interconnected along the periphery of the diverter 304, the connection surface 30421 is connected to inner side surfaces of the two third outer flow guiding plates 30221, and the diversion guide surface 30442 is a conical surface and faces the third inner flow guiding plates 30222. The structure of the diverter 304 is actually the structure of half of a cone after being cut in half along the direction of the central axis of the cone. The diversion outer peripheral surface 3042 of the diverter 304 is disposed as a structure in which the connection surface 30421 and the diversion guide surface 30422 are connected, the connection surface 30421 can be connected to the two third outer flow guiding plates 30221 (the connection surface 30421 is not exposed after the connection), and the conical diversion guide surface 30422 is exposed on the diverter 304. The conical structure is utilized for diverting the coolant from top to bottom and can reduce the resistance and splashing of the coolant as far as possible, ensuring that the coolant can be gradually dispersed from the diversion top surface 3041 with a small size to the diversion bottom surface 3043 with a large size along the conical structure. The dispersed coolant then enters the multiple third flow guiding grooves 3021. At this time, the coolant is relatively uniformly distributed within the multiple third flow guiding grooves 3021.

In some embodiments, multiple mounting grooves 3012 engaging with the multiple cells 211 are disposed on the second body 301. The multiple mounting grooves 3012 are disposed so that lower ends of the multiple cells 211 can be secured to the tray 3 easily, reducing the securing difficulty of the multiple cells 211 and preventing the multiple cells 211 from shifting. In some embodiments, the multiple cells 211 are bonded within the multiple mounting grooves 3012 through a sealant.

The groove bottom of a mounting groove 3012 is provided with a first pressure relief hole 3013. The first pressure relief hole 3013 passes through the second body 301. The groove bottoms of the multiple mounting grooves 3012 are provided with the first pressure relief holes 3013 respectively, so when a cell 211 malfunctions, substances such as electrolytes sprayed out by the cell 211 due to pressure relief can be discharged to the bottom of the tray 3, that is, one side surface of the tray 3 away from the coolant, through the first pressure relief hole 3013 so that the substances such as the electrolytes can be prevented from polluting the coolant, and the malfunctioned cell 211 can also be prevented from affecting the rest adjacent cells 211. In this embodiment, since the multiple cells 211 are bonded within the multiple mounting grooves 3012 through the sealant, the bonding positions of the sealant can also play a sealing role to prevent the coolant from leaking from the upper region of the tray 3 to the lower region of the tray 3.

In one or more embodiments, the two end surfaces of the second body 301 in the third direction are each provided with a second recess group, each second recess group includes multiple second recesses 3014 spaced apart in the second direction, and a second recess 3014 is recessed to a region between two adjacent mounting grooves 3012. The multiple second recesses 3014 are disposed so that the space at two ends of the second body 301 in the third direction can be reduced. Because the widths of the multiple flow guiding clearances 220 between adjacent cell groups 210 are consistent when the multiple cells 211 have the same size, if flow guiding clearances 220 located on the two sides of the battery module 200 in the third direction do not have second recesses 3014, the multiple flow guiding clearances 220 with inconsistent widths are formed. This enables the cells 211 on the two sides of the battery module 200 to have an inconsistent cooling effect with the cells 211 in the middle of the battery module 200. In one or more embodiments, the multiple second recesses 3014 are arcuate, and two adjacent second recesses 3014 are connected through an arcuate second protrusion 3016 to enable the end surface of the second body 301 in the third direction to form a corrugated surface.

In one or more embodiments, the second body 301 is provided with a connection protruding portion 305, the connection protruding portion 305 is in a circular arrangement and protrudes annularly from the periphery of the second body 301, the connection protruding portion 305 and the third flow guiding assembly 302 are located on the same side surface of the second body 301, that is, the connection protruding portion 305 protrudes from the upper side surface of the second body 301, and a slot 3051 configured to engage with the box body 1 of the battery box 100 is concavely disposed on the connection protruding portion 305. The connection protruding portion 305 and the slot 3051 are disposed so that the tray 3 and the box body 1 can be manufactured separately, and the tray 3 is connected to the box body 1 through assembly so that the manufacturing difficulty can be reduced. During assembly, a sealant may be disposed within the slot 3051, the lower end of the box body 1 is inserted into the slot 3051, the bonding and securing of the box body 1 are achieved through the sealant, and after the bonding, the box body 1 and the tray 3 are also sealed through the sealant, avoiding leaking the coolant.

In other embodiments, the connection protruding portion 305 and the slot 3051 are not limited to being provided to connect the box body 1. As shown in FIGS. 10 and 11, the tray 3 may also be directly soldered to the box body 1, or the tray 3 and the box body 1 are integrally injection molded or integrally cast.

With reference to FIGS. 12 to 16 (some reference numerals are the same as those in FIGS. 6 to 8 and 17 to 22), embodiments of the present application further provide the battery box 100. The battery box 100 includes the box body 1. The accommodation cavity is disposed within the box body 1. The battery box 100 further includes the tray 3 provided in the embodiments of the present application. The lower end of the box body 1 is provided with an opening 1014. The tray 3 seals the opening 1014. The liquid inlet region 3011, the third flow guiding assembly 302, the drainage plate 303 and the diverter 304 that are on the tray 3 are disposed within the accommodation cavity. The liquid inlet 101 and the liquid outlet 102 are also disposed on the box body 1 and communicate with the accommodation cavity. The liquid inlet 101 faces the diverter 304 of the tray 3. After entering the box body 1 of the battery box 100 through the liquid inlet 101, the coolant is first diverted by the diverter 304 and then diverted by the multiple third flow guiding grooves 3021. After entering the multiple flow guiding clearances 220 of the battery module 200, the coolant entering the multiple third flow guiding grooves 3021 is collected in the drainage plate 303 and finally drained to other regions of the box body 1 through the drainage surface 3031 or directly discharged through the liquid outlet 102.

In the battery box 100, the coolant is diverted, guided and drained by the tray 3 so that the heat of the multiple cells 211 of the battery module 200 can be effectively exchanged and dissipated to prevent local cells 211 from aging due to uneven heat dissipation, prolonging the service life of the entire battery module 200.

In other embodiments, the first direction is not limited to the vertical direction, and the first direction may also be a horizontal direction, that is, when the battery box 100 is placed vertically, the first direction is the horizontal direction. Moreover, the second direction is also not limited to the length direction of the battery box 100, and the third direction is not limited to the width direction of the battery box 100. The second direction may also be the width direction of the battery box 100, and the third direction may also be the length direction of the battery box 100. Limitations on the directions are not repeated here.

With reference to FIGS. 17 to 22, embodiments of the present application further provide the battery pack. The battery pack includes the battery box 100 and the battery module 200. The accommodation cavity is disposed within the battery box 100. The battery module 200 is disposed within the accommodation cavity. The structure of the battery box 100 is not repeated here.

As shown in FIGS. 12 to 16 (with reference to FIGS. 1 to 3, 6 to 8, and 17 to 22), embodiments of the present application provide the battery box 100. In this embodiment, the first direction is the vertical direction, the second direction is the length direction of the battery box 100, and the third direction is the width direction of the battery box 100.

Each cell 211 of the battery module 200 mounted within the battery box 100 being a cylindrical cell 211 is used as an example for illustration below. Each cell 211 is not limited to the cylindrical cell 211 and may also be square, polygonal, or specially shaped. The structure of each cell 211 is not limited, and part of the structure of the battery box 100 is adaptively adjusted according to the shape of each cell 211.

In this embodiment, the battery box 100 includes the box body 1 and the separator 2. The liquid inlet 101 and the liquid outlet 102 are spaced apart on the box body 1, and the accommodation cavity configured to accommodate the battery module 200 is disposed within the box body 1. The separator 2 is disposed within the accommodation cavity and divides the accommodation cavity into the first cavity 103 and the second cavity 104 that are distributed in the first direction. The first cavity 103 is located above the second cavity 104. Multiple mounting holes 2012 configured to mount cells 211 of the battery module 200 are disposed on the separator 2. Two ends of each cell 211 extend into the first cavity 103 and the second cavity 104 respectively. A return hole 2011 is disposed on the separator 2. The separator 2 has a liquid outlet region 2013 communicating with the liquid outlet 102. The liquid outlet region 2013 is located within the first cavity 103. The liquid outlet region 2013 and the return hole 2011 are adjacent to the two ends of the separator 2 in the second direction respectively. The liquid outlet 102 communicates with the liquid outlet region 2013. The second cavity 104 has the liquid inlet region 3011. The liquid inlet region 3011 and the liquid outlet region 2013 are located at the same end of the box body 1 in the second direction separately. The liquid inlet 101 communicates with the liquid inlet region 3011. The first direction has an included angle with the second direction.

In the battery box 100 of the embodiments of the present application, the separator 2 is used for dividing the accommodation cavity within the box body 1 into the first cavity 103 and the second cavity 104 that are independent of each other. After the cells 211 are mounted to the separator 2, the two cavities are sealed relative to each other. The coolant first enters the liquid inlet region 3011 of the second cavity 104 through the liquid inlet 101, and a portion of the cells 211 located in the second cavity 104 is then immersed in the coolant from one end adjacent to the liquid inlet region 3011 to one end away from the liquid inlet region 3011 in the second direction sequentially to perform heat exchange and dissipation on this portion of the multiple cells 211. The coolant then enters the first cavity 103 through the return hole 2011 on the separator 2, and the other portion of the cells 211 located in the first cavity 103 is immersed in the coolant from one side on which the return hole 2011 is located to the liquid outlet region 2013 sequentially to perform heat exchange and dissipation on the rest of the multiple cells 211, and after the heat exchange, the coolant is collected in the liquid outlet region 2013 and discharged through the liquid outlet 102. During the whole process, the heat exchange is performed on the multiple cells 211 of the battery module 200 in steps through the coolant, and the special immersion path of the coolant (which is similar to a U-shaped immersion path, that is, the path indicated by the arrow in FIG. 22) increases the probability of each cell 211 contacting the coolant, improves the uniformity and effect of heat exchange of all cells 211 and prolongs the service life of all the cells 211.

In this embodiment, the battery module 200 includes multiple rows of cell groups 210 arranged in the third direction, each row of cell group 210 includes multiple cells 211 arranged in the second direction, and two adjacent rows of cell groups 210 are staggered. This design can enable a more compact arrangement of the battery module 200, ensure a higher space utilization rate within the battery box 100 and achieve a larger energy density of the battery pack after the battery module 200 is assembled.

The battery box 100 may be only provided with the separator 2. The structure of the separator 2 is the same as that mentioned in the embodiments of the present application and is not repeated here.

The battery box 100 may also be provided with both the separator 2 and the tray 3. In one or more embodiments, the tray 3 is connected to the box body 1 and spaced from the separator 2, and the second cavity 104 is formed between the tray 3 and the separator 2, that is, the tray 3 is mounted to the bottom of the second cavity 104. The structure of the separator 2 is the same as that mentioned in the embodiments of the present application, and the structure of the tray 3 is the same as that mentioned in the embodiments of the present application, which are not repeated here.

The battery box 100 with both the separator 2 and the tray 3 is used as an example for illustration below.

The separator 2 is secured to a middle portion of the cells 211 in the first direction (that is, the middle portion of the vertical direction). In this case, the lengths of the cells 211 located in the first cavity 103 and the second cavity 104 are consistent.

In this embodiment, the height of the second cavity 104 in the first direction is H1, the liquid height of the coolant within the accommodation cavity in the first direction is H2, the size of each cell 211 in the first direction is H3, and the relationship ratio of H1, H2 and H3 may be 2:5:5 or 1:4:4. The relationship ratio is designed so that the height of the second cavity 104 can be lower than the height of the first cavity 103, facilitating the acceleration of the flow rate of the coolant in the second cavity 104, thereby accelerating the flow of the coolant into the first cavity 103 to cool the cells 211 and increasing the overall heat exchange efficiency of the cells 211. In other embodiments, the height of the second cavity 104 is not limited to being less than the height of the first cavity 103, and the height of the second cavity 104 and the height of the first cavity 103 may also be consistent, that is, the separator 2 is located in a middle portion of the box body 1 in the first direction, so that the height of the first cavity 103 and the height of the second cavity 104 can be consistent.

The liquid inlet 101 and the liquid outlet 102 are located on the same side of the box body 1 in the first direction, face the first cavity 103 and are adjacent to one end at which the liquid outlet region 2013 is located. The liquid inlet 101 and the liquid outlet 102 are disposed on the same side of the box body 1 in the first direction, that is, the upper side surface of the battery box 100 or the lower side surface of the battery box 100, so that the liquid inlet 101 and the liquid outlet 102 can be prevented from occupying the space of the battery box 100 in the horizontal direction, and the battery box 100 can be arranged more compactly, increasing the space utilization rate. The liquid inlet 101 and the liquid outlet 102 are adjacent to the end at which the liquid outlet region 2013 is located so that the length for arranging a pipe within the battery box 100 can be shortened, the cost can be saved, and the space occupation rate within the battery box 100 can be reduced. In one or more embodiments, the liquid inlet 101 and the liquid outlet 102 are located on the upper side surface of the battery box 100. This design can enable the coolant to flow down into the second cavity 104 located below when the coolant is introduced. After the coolant in the second cavity 104 fills the entire second cavity 104, the coolant is then immersed in the first cavity 103 through the return hole 2011.

In other embodiments, the liquid inlet 101 and the liquid outlet 102 are not limited to being disposed on the same side surface of the box body 1 and may also be disposed on different side surfaces. For example, the liquid inlet 101 is disposed on the lower side surface of the battery box 100, and the liquid outlet 102 is disposed on the upper side surface of the battery box 100, or the liquid inlet 101 and the liquid outlet 102 are disposed on the left side surface of the battery box 100 and the right side surface of the battery box 100 respectively, or the liquid inlet 101 and the liquid outlet 102 are disposed on the front side surface of the battery box 100 and the back side surface of the battery box 100 respectively.

In one or more embodiments, the battery box 100 further includes a first sealing plate 4 and a second sealing plate 5, and two ends of the box body 1 in the first direction are provided with openings 1014 respectively. The lower end of the box body 1 in the first direction is sealed through the tray 3, a pressure relief groove 3015 is concavely disposed on one side surface of the tray 3 away from the separator 2, multiple mounting grooves engaging with the cells are disposed on the tray, the groove bottom of the mounting groove is provided with the first pressure relief hole 3013 (that is, a first pressure relief hole 3013 corresponding to each cell 211 is disposed on the tray 3), the first pressure relief holes 3013 communicate with the pressure relief groove 3015, one side of the tray away from the separator is connected to the first sealing plate 4, the first sealing plate 4 seals the notch of the pressure relief groove 3015, and the opening 1014 at the upper end of the box body 1 in the first direction is sealed by the second sealing plate 5 to form the sealed battery box 100. The pressure relief groove 3015 is disposed so that the first pressure relief holes 3013 on the tray 3 can be communicated, and the first pressure relief holes 3013 also correspond to the positions of the cells 211, so when a certain cell 211 malfunctions and requires a pressure relief, substances such as electrolytes sprayed out from the cell 211 can enter the pressure relief groove 3015 through the respective first pressure relief hole 3013. The first sealing plate 4 is configured to avoid the exposure of the opening of the pressure relief groove 3015 and ensure that the pressure relief groove 3015 can store and seal the substances such as the electrolytes sprayed out from the cell 211, thereby preventing adjacent battery boxes 100 from affecting each other and avoiding environmental pollution. The openings 1014 and the second sealing plate 5 are disposed so that components such as the separator 2 and the battery module 200 can be mounted easily, and components within the battery box 100 can also be maintained later easily.

In one or more embodiments, multiple pillars 306 protrude from the groove bottom of the pressure relief groove 3015 and are located between adjacent first pressure relief holes 3013, and ends of the multiple pillars 306 away from the groove bottom of the pressure relief groove 3015 abut against the inner side of the first sealing plate 4. The multiple pillars 306 are disposed so that the multiple pillars 306 can be used for supporting the first sealing plate 4, avoiding the deformation of the first sealing plate 4.

The upper end of the box body 1 in the first direction is provided with an opening 1014 communicating with the accommodation cavity. An end portion of the box body extends toward a middle portion of the opening 1014 to form a mounting portion 1010. The second sealing plate 5 is connected to the mounting portion 1010 to seal the opening 1014. The mounting portion 1010 is disposed so that a position convenient for mounting the second sealing plate 5 can be formed on the upper side surface of the box body 1. In one or more embodiments, a sealing groove 1011 in a circular arrangement is annularly formed on the mounting portion 1010 around the periphery of the opening 1014, a sealant is disposed within the sealing groove 1011, and the second sealing plate 5 is connected to the mounting portion 1010 through the sealant. In one or more embodiments, the inner sidewall of the mounting portion 1010 is annularly provided with a step 1012 in a circular arrangement, the step 1012 is spaced from one side surface of the mounting portion 1010 away from the accommodation cavity (that is, the step 1012 is concave, and the upper side surface of the step 1012 is spaced from the upper side surface of the mounting portion 1010), the second sealing plate 5 abuts against the step 1012, and the sealing groove 1011 is disposed on the step 1012. The step 1012 is disposed so that the mounting position of the second sealing plate 5 can be limited, ensuring that the second sealing plate 5 can seal the opening 1014 accurately and also effectively preventing the second sealing plate 5 from shifting. In addition to securing the second sealing plate 5 through bonding, the second sealing plate 5 may also be secured through screws in combination with a sealing ring or through an engagement structure in combination with a sealing ring. A detachable connection manner facilitates the detachment of the second sealing plate 5, thereby facilitating the mounting and maintenance of the battery module 200 within the battery box 100.

In this embodiment, the liquid inlet 101 and the liquid outlet 102 are disposed on the mounting portion 1010, a liquid inlet joint 6 corresponding to the liquid inlet 101 is disposed on the mounting portion 1010, and a liquid outlet joint 7 corresponding to the liquid outlet 102 is disposed on the mounting portion 1010. The liquid inlet joint 6 and the liquid outlet joint 7 are used for connecting an outer pipe to achieve the circular cooling of the coolant. Moreover, both the liquid inlet 101 and the liquid outlet 102 are disposed on the mounting portion 1010 to further prevent the pipe from being obstructed and pulled when the second sealing plate 5 is mounted and dismantled. The liquid inlet joint 6 and the liquid outlet joint 7 may be quick-release joints to implement quick mounting and dismantling of the pipe. In other embodiments, the liquid inlet 101 and the liquid outlet 102 may also be disposed on the second sealing plate 5, or the liquid inlet 101 and the liquid outlet 102 are disposed on the mounting portion 1010 and the second sealing plate 5 respectively.

In addition, the liquid inlet 101 communicates with the second cavity 104 through the liquid inlet pipe 204, the liquid inlet pipe 204 is disposed within the first cavity 103, the via 2017 communicating with the liquid inlet pipe 204 is disposed on the separator 2, and the via 2017 passes through the separator 2. To facilitate the maintenance and avoid leaking, the liquid inlet pipe 204 may be directly secured to the separator 2. In other embodiments, the liquid inlet pipe 204 may also be separately disposed, after the separator 2 is mounted, two ends of the liquid inlet pipe 204 abut against the mounting portion 1010 and the separator 2 respectively. Moreover, the liquid inlet pipe 204 may also directly pass through the via 2017, that is, part of the liquid inlet pipe 204 is located within the first cavity 103 and abuts against the mounting portion 1010 at the position of the mounting portion 1010 corresponding to the liquid inlet 101 while the other part of the liquid inlet pipe 204 extends into the second cavity 104. In this case, the outer sidewall of the liquid inlet pipe 204 and the via wall of the via 2017 are required to be sealed to prevent the coolant within the first cavity 103 from entering the second cavity 104 through a gap between the outer sidewall of the liquid inlet pipe 204 and the via wall of the via 2017.

In one or more embodiments, the box body 1 includes a first side plate 105 and a second side plate 106 that are distributed in the third direction. Inner side surfaces of the first side plate 105 and the second side plate 106 are each provided with multiple third recesses 107 spaced apart in the second direction. The shapes of the multiple third recesses 107 match the shapes of the outer sidewalls of cells 211 on the outer sides of the battery module 200 in the third direction. The outer sidewalls of the cells 211 are spaced from the recess walls of the multiple third recesses 107. A protruding structure 108 is formed between two adjacent third recesses 107, inserted into a region between two adjacent cells 211 in the second direction respectively and spaced from the outer sidewalls of the respective cells 211. Two end surfaces of the separator 2 in the third direction abut against and seal the inner sidewalls of the first side plate 105 and the second side plate 106 respectively. Therefore, the shapes of the two end surfaces of the separator 2 in the third direction match the shape of the first side plate 105 and the shape of the second side plate 106 respectively. In one or more embodiments, the end surfaces of the separator 2 in the third direction are provided with first protrusions 2014 corresponding to the third recesses 107, and the end surfaces of the separator 2 in the third direction are provided with first recesses 2016 corresponding to the protruding structures 108, the outer sidewall of the first protrusion 2014 abuts against the recess wall of the respective third recess 107, and the outer sidewall of the protruding structure 108 abuts against the recess wall of the respective first recess 2016 to form a bonding and abutment structure to ensure the sealing at the connection positions between the separator 2 and the first side plate 105 and the second side plate 106 of the box body 1.

The first side plate 105 and the second side plate 106 are corrugated plates, recess structures 109 corresponding to the protruding structures 108 are formed on the outer side surfaces of the first side plate 105 and the second side plate 106, and the two end surfaces of the separator 2 in the third direction form corrugated surfaces. The first side plate 105 and the second side plate 106 are set as the corrugated plates so that the space of the battery box 100 in the third direction can be saved.

To facilitate the assembly of the cells 211, in addition to the limitations of the separator 2, the mounting grooves 3012 may also be disposed on the tray 3. The number and layout of mounting grooves 3012 are provided according to the number and layout of cells 211 of the battery module 200. The lower ends of the cells 211 are inserted into the multiple mounting grooves 3012 respectively. The first pressure relief holes 3013 are disposed at the groove bottoms of the mounting grooves 3012 and pass through the second body 301 of the tray 3 in the first direction (that is, passing through the thickness direction of the second body 301). To prevent the coolant from leaking to one side of the tray 3 away from the second cavity 104 (that is, to prevent the coolant from leaking to the bottom of the outer side of the tray 3) through a gap between the outer sidewalls of the cells 211 and the groove walls of the multiple mounting grooves 3012 after the cells 211 and the tray 3 are assembled, a sealant is disposed between the groove walls of the mounting grooves 3012 and the outer sidewalls of the cells 211.

A second pressure relief hole 1013 is disposed on the box body 1 and communicates with the pressure relief groove 3015 and the exterior of the box body 1. The second pressure relief hole 1013 is disposed so that substances such as electrolytes generated and relieved by a certain fault cell 211 within the pressure relief groove 3015 can be discharged to the exterior of the box body 1. In one or more embodiments, the second pressure relief hole 1013 is disposed on one side surface of the box body 1 in the second direction. In other embodiments, the second pressure relief hole 1013 is not limited to being disposed on the side surface of the box body 1 in the second direction or may also be disposed on a side surface of the box body 1 in the third direction (that is, on one or both of the first side plate 105 and the second side plate 106).

In one or more embodiments, at least part of the projection of the return hole 2011 on the separator 2 along the first direction overlaps the drainage surface 3031 of the drainage plate 303 on the tray 3. This design can enable the coolant drained upward by the drainage surface 3031 to enter the first cavity 103 through the return hole 2011 as quickly as possible, reduce the time in which the coolant stays in the second cavity 104 and accelerate the circulation of the coolant. In one or more embodiments, all the projection of the return hole 2011 along the first direction coincide with the drainage surface 3031.

In one or more embodiments, the tray 3 is securely connected to the box body 1. A fixed connection manner may reduce the assembly difficulty and avoid the leakage of the coolant at the connection position between the tray 3 and the box body 1. In one or more embodiments, the tray 3 and the box body 1 are integrally manufactured and formed. An integral formation manner is simple to operate and has no abutment gap and a good anti-leakage effect. In one or more embodiments, the tray 3 and the box body 1 are integrally injection molded.

Certainly, the tray 3 is not limited to being securely connected to the box body 1 and may also be detachably connected to the box body 1. In one or more embodiments, the slot 3051 is disposed on the tray 3, one end of the box body 1 in the first direction is inserted into the slot 3051, and the sealant is disposed within the slot 3051 to bond the box body 1 with the tray 3 and seal the connection position between the box body 1 and the tray 3. The sealant is selected so that not only connection and securing can be achieved, but also good sealing can be achieved. In one or more embodiments, the upper surface of the tray 3 is annularly provided with the connection protruding portion 305 in a circular arrangement, and the slot 3051 is disposed on the connection protruding portion 305.

As shown in FIGS. 17 to 22 (some reference numerals are the same as those in FIGS. 1 to 3, 6 to 8, and 12 to 16), embodiments of the present application further provide the battery pack. The battery pack includes the battery module 200 and the battery box 100. The battery module 200 is sealed and mounted within the battery box 100. The battery box 100 is the battery box 100 provided in the embodiments of the present application.

In one or more embodiments, after the battery module 200 is mounted to the battery box 100, the lower ends of the cells 211 of the battery module 200 abut against the tray 3 within the battery box 100, the upper ends of the cells 211 are spaced from the second sealing plate 5 to form a space for mounting components such as a busbar, and the separator 2 is stuck in the middle portion of the length direction of the cells 211, that is, the middle portion of the cells 211 in the first direction, so that the lengths of the cells 211 within the first cavity 103 and the second cavity 104 can be consistent, ensuring the uniformity of heat dissipation.

Embodiments of the present application further provide a cooling method for a battery pack. The cooling method includes the steps below.

In step S100, a coolant is supplied so that the coolant enters a second cavity 104 from a liquid inlet 101 of a battery box 100 to immerse a portion of cells 211 located in the second cavity 104 in the coolant along a second direction from one end of the second cavity 104 provided with a liquid inlet region 3011 to one end away from the liquid inlet region 3011.

In step S200, the coolant within the second cavity 104 enters a first cavity 103 through a return hole 2011 on a separator 2 to immerse a portion of the cells 211 located in the first cavity 103 in the coolant along a second direction from one end of the first cavity 103 provided with the return hole 2011 to one end at which a liquid outlet region 2013 is located.

In step S300, the coolant is collected in the liquid outlet region 2013 and then discharged through a liquid outlet 102.

In one or more embodiments, step S100 includes the following.

In step S110, the coolant enters the second cavity 104 from the liquid inlet 101 of the battery box 100 through a liquid inlet pipe 204 from the liquid inlet 101 of the battery box 100.

In step S120, the coolant first contacts a diverter 304 for diversion and is then distributed into third flow guiding grooves 3021 of a third flow guiding assembly 302 uniformly.

In step S130, the coolant within each third flow guiding groove 3021 is transmitted to a respective flow guiding clearance 220 of the battery module 200 to exchange heat with a lower portion of cells 211 on one or two sides of the respective flow guiding clearance 220. The transmission direction of the coolant is from the end of the second cavity 104 provided with the liquid inlet region 3011 to the end of the second cavity 104 away from the liquid inlet region 3011 along the second direction.

Step S200 includes the following.

In S210, the coolant that has undergone the heat exchange in the flow guiding clearances 220 contacts a drainage surface 3031 of a drainage plate 303 and is guided to the return hole 2011 on the separator 2 through the drainage surface 3031.

In S220, the coolant enters the first cavity 103 through the return hole 2011 and flows toward one side on which the liquid outlet region 2013 is located under the guide of a blocking plate flow guiding surface 2051 of a blocking plate 205.

In S230, the coolant is guided to a respective flow guiding clearance 220 through each second flow guiding groove 2031 of a second flow guiding assembly 203 to exchange heat with an upper portion of cells 211 on one or two sides of the respective flow guiding clearance 220.

In S240, the coolant within the flow guiding clearances 220 enters first flow guiding grooves 2021 of a first flow guiding assembly 202, and all the first flow guiding grooves 2021 collect the coolant to the liquid outlet region 2013.

In addition, after being discharged to the battery box 100, the coolant may also be cooled by using an external refrigeration device. The cooled coolant is recirculated to the liquid inlet 101 to cool the battery module 200 within the battery box 100 again.

The separator 2 and the tray 3 within the battery box 100 are not limited to being distributed up and down in the vertical direction and may also be distributed in the horizontal direction, that is, the first direction is the horizontal direction. Moreover, the second direction is also not limited to the length direction of the battery box 100, and the third direction is not limited to the width direction of the battery box 10. The second direction may also be the width direction of the battery box 100, and the third direction may also be the length direction of the battery box 100. When the first direction is the horizontal direction, the first cavity 103 and the second cavity 104 may be arranged from left to right or from right to left.

The flow direction of the coolant is shown in FIG. 22 (along the direction of the arrow). After the coolant enters the second cavity 104, the portion of the cells 211 located within the second cavity 104 is immersed in the coolant from bottom to top for cooling. When reaching the top of the second cavity 104, the coolant enters the first cavity 103 through the return hole 2011, and flows from the upper portion to the lower portion of the first cavity 103 to immerse the portion of the cells 211 located within the first cavity 103 in the coolant for cooling. Finally, the coolant is discharged to the exterior of the battery box 100 through the liquid outlet 102 at the lower portion of the first cavity 103.

Certainly, the first direction is not limited to being horizontal and may also be at a certain included angle with the horizontal direction. For the cooling path of the coolant, references can be made to the preceding embodiments. Details are not repeated here.

## Claims

1. A separator (2), being applied to a battery box (100) and comprising:
a first body (201), wherein the first body (201) is provided with a return hole (2011) and a plurality of mounting holes (2012) passing through the first body (201) in a first direction, the plurality of mounting holes (2012) are configured to mount cells (211) of a battery module (200), a liquid outlet region (2013) is formed on one side surface of the first body (201) in the first direction and
configured to communicate with a liquid outlet (102) of the battery box (100), the liquid outlet region (2013) and the return hole (2011) are adjacent to two ends of the first body (201) in a second direction respectively, the plurality of mounting holes (2012) are located between the liquid outlet region (2013) and the return hole (2011), and the first direction is disposed at an included angle with the second direction; and
a first flow guiding assembly (202), wherein the first flow guiding assembly (202) and the liquid outlet region (2013) are located on the same side surface of the first body (201), and the first flow guiding assembly (202) comprises a plurality of first flow guiding grooves (2021), wherein first ends of all the plurality of first flow guiding grooves (2021) communicate with the liquid outlet region (2013), second ends of all the plurality of first flow guiding grooves (2021) communicate with a region in which the battery module (200) is located, and the first flow guiding assembly (202) is configured to guide a coolant in the region in which the battery module (200) is located to the liquid outlet region (2013).

2. The separator of claim 1, wherein the battery module (200) comprises a plurality of rows of cell groups (210) arranged in a third direction, each row of the plurality of rows of cell groups (210) comprises a plurality of cells (211) arranged in the second direction, the third direction is disposed at an included angle with the first direction and at an included angle with the second direction separately, a flow guiding clearance (220) is formed between at least two adjacent rows of the plurality of rows of cell groups (210), and the plurality of first flow guiding grooves (2021) are in one-to-one correspondence with a plurality of flow guiding clearances (220).

3. The separator of claim 2, wherein two side edges of the first body (201) in the third direction are spaced from hole walls of the plurality of mounting holes (2012) to form flow guiding clearances of the plurality of flow guiding clearances (220) on two sides of the battery module (200) in the third direction respectively.

4. The separator of claim 2, wherein the first flow guiding assembly (202) comprises a plurality of first flow guiding plates (2022) spaced apart, a first flow guiding groove (2021) of the plurality of first flow guiding grooves (2021) is formed between two adjacent ones of the plurality of first flow guiding plates (2022), first ends of the plurality of first flow guiding plates (2022) extend into the liquid outlet region (2013), and second ends of the plurality of first flow guiding plates (2022) extend into a region adjacent to the battery module (200).

5. The separator of claim 4, wherein any one or a combination of two of the following is satisfied:
a first end of a first flow guiding plate (2022) of the plurality of first flow guiding plates (2022) has a width of L1, a second end of the first flow guiding plate (2022) has a width of L2, and L1 is less than L2;
an end surface of a second end of a first flow guiding plate (2022) among the plurality of first flow guiding plates (2022) has a shape matching an appearance of a respective one of the cells (211); and
an end surface of a second end of a first flow guiding plate (2022) among the plurality of first flow guiding plates (2022) is spaced from an outer sidewall of a respective one of the cells (211).

6. The separator of claim 1, wherein a collection groove (2018) is concavely formed on the first body (201) and located in the liquid outlet region (2013), and all the plurality of first flow guiding grooves (2021) communicate with the collection groove (2018).

7. The separator of claim 1, wherein the first flow guiding assembly (202) comprises a plurality of first flow guiding plates (2022) spaced apart, and a first flow guiding groove (2021) of the plurality of first flow guiding grooves (2021) is formed between two adjacent ones of the plurality of first flow guiding plates (2022); and
among the plurality of first flow guiding plates (2022), in a third direction, two first flow guiding plates (2022) located on outermost sides of the first flow guiding assembly (202) are two first outer flow guiding plates (20221), ends of the two first outer flow guiding plates (20221) away from the cells (211) are connected, first flow guiding plates (2022) other than the two first outer flow guiding plates (20221) are first inner flow guiding plates (20222), and ends of the first inner flow guiding plates (20222) facing the two first outer flow guiding plates (20221) are spaced from inner sidewalls of the two first outer flow guiding plates (20221) to form the liquid outlet region (2013).

8. The separator of any one of claims 1 to 7, wherein the first body (201) is provided with immersion holes (2015) passing through the first body (201) in the first direction, an immersion hole (2015) of the immersion holes (2015) is located between adjacent ones of the plurality of mounting holes (2012) and corresponds to a clearance between adjacent ones of the cells (211), and a size of the immersion hole (2015) is less than a size of the return hole (2011);
wherein any one or a combination of two of the following is satisfied:
a sum of areas of all the immersion holes (2015) on the first body (201) is S1, an area of the first body (201) is S2, and a relationship ratio of S1 to S2 is 1:25000 to 3:50000;
an area of a single one of the immersion holes (2015) is S3, an area of the return hole (2011) is S4, and a relationship ratio of S3 to S4 is 2:25 to 1:8; and
a sum of areas of all the immersion holes (2015) on the first body (201) is S1, a sum of areas of all return holes (2011) on the first body (201) is S5, and a relationship ratio of S1 to S5 is 1:2 to 2:3.

9. The separator of any one of claims 1 to 7, wherein a second flow guiding assembly (203) is disposed on the first body (201) and adjacent to the return hole (2011), the second flow guiding assembly (203) and the first flow guiding assembly (202) are located on the same side surface of the first body (201), and the second flow guiding assembly (203) comprises a plurality of second flow guiding grooves (2031), wherein all the plurality of second flow guiding grooves (2031) communicate with the return hole (2011) and the region in which the battery module (200) is located.

10. The separator of claim 9, wherein the battery module (200) comprises a plurality of rows of cell groups (210) arranged in a third direction, each row of the plurality of rows of cell groups (210) comprises a plurality of cells (211) arranged in the second direction, the third direction is disposed at an included angle with the first direction and at an included angle with the second direction separately, a flow guiding clearance (220) is formed at least between two adjacent rows of the plurality of rows of cell groups (210), and the plurality of second flow guiding grooves (2031) are in one-to-one correspondence with a plurality of flow guiding clearances (220);
wherein the second flow guiding assembly (203) comprises a plurality of second flow guiding plates (2032) spaced apart, a second flow guiding groove (2031) of the plurality of second flow guiding grooves (2031) is formed between two adjacent ones of the plurality of second flow guiding plates (2032), first ends of the plurality of second flow guiding plates (2032) extend into a region adjacent to the plurality of cells (211), and at least one return hole (2011) is arranged between two adjacent ones of the plurality of second flow guiding plates (2032);
wherein any one or a combination of two of the following is satisfied:
a second end of a second flow guiding plate (2032) of the plurality of second flow guiding plates (2032) away from the liquid outlet region (2013) has a width of L3, a first end of the second flow guiding plate (2032) adjacent to the liquid outlet region (2013) has a width of L4, and L3 is less than L4;
an end surface of a first end of a second flow guiding plate (2032) of the plurality of second flow guiding plates (2032) has a shape matching an appearance of a respective one of the cells (211); and
an end surface of a first end of a second flow guiding plate (2032) of the plurality of second flow guiding plates (2032) is spaced from an outer sidewall of a respective one of the plurality of cells (211).

11. The separator of any one of claims 1 to 7, wherein a liquid inlet pipe (204) is disposed on the first body (201) and secured to the liquid outlet region (2013), the liquid outlet region (2013) is provided with a via (2017) communicating with the liquid inlet pipe (204), and the via (2017) passes through the first body (201).

12. The separator of any one of claims 1 to 7, wherein a plurality of return holes (2011) are spaced apart on the first body (201) in a third direction, or the return hole (2011) extends in a third direction; and
the first body (201) is further provided with a blocking plate (205) located between the return hole (2011) and an end surface of one end of the first body (201) adj acent to the return hole (2011) in the second direction, a length of the blocking plate (205) extends in the third direction, and the blocking plate (205) protrudes from one side surface of the first body (201) provided with the first flow guiding assembly (202);
wherein one side surface of the blocking plate (205) facing the return hole (2011) is provided with an inclined blocking plate flow guiding surface (2051), wherein the blocking plate flow guiding surface (2051) extends in the first direction from one end facing the first body (201) to one end away from the first body (201) and is inclined to a direction facing the first flow guiding assembly (202) in the second direction.

13. The separator of any one of claims 1 to 7, wherein two end surfaces of the first body (201) in a third direction are provided with first recess groups respectively, each of the first recess groups comprises a plurality of first recesses spaced apart in the second direction, and a first recess of the plurality of first recesses is concave toward a region between two adjacent ones of the plurality of mounting holes (2012).

14. A battery box (100), comprising:
a box body (1), wherein a liquid inlet (101) and a liquid outlet (102) are spaced apart on the box body (1), and an accommodation cavity configured to accommodate a battery module (200) is disposed within the box body (1); and
a separator (2) disposed in the accommodation cavity, wherein the separator divides the accommodation cavity into a first cavity (103) and a second cavity (104) that are distributed in a first direction, a plurality of mounting holes (2012) configured to mount cells (211) of the battery module (200) are disposed on the separator (2), two ends of the cells (211) in the first direction extend into the first cavity (103) and the second cavity (104), respectively, a return hole (2011) is disposed on the separator (2), the separator has a liquid outlet region (2013) communicating with the liquid outlet (101), the liquid outlet region (2013) is located in the first cavity (103), the liquid outlet region (2013) and the return hole (2011) are located adjacent to two ends of the separator (2) in a second direction respectively, the liquid outlet (102) communicates with the liquid outlet region (2013), the second cavity (104) has a liquid inlet region (3011), the liquid inlet region (3011) and the liquid outlet region (2013) are adjacent to a same end of the box body (1) in the second direction separately, and the liquid inlet (101) communicates with the liquid inlet region (3011), wherein the first direction is disposed at an included angle with the second direction.

15. A battery pack, comprising a battery module (200) and a battery box (100), wherein the battery module (200) is sealed and mounted in the battery box (100), and the battery box (100) is the battery box (100) according to claim 14.
